(19) 

Europäisches
Patentamt
European
Patent Office
Office européen
des brevets

(11) **EP 4 472 318 A1**

(12) **EUROPEAN PATENT APPLICATION**
published in accordance with Art. 153(4) EPC

(43) Date of publication:
**04.12.2024 Bulletin 2024/49**

(21) Application number: **23746234.6**

(22) Date of filing: **19.01.2023**

(51) International Patent Classification (IPC):
*H04W 72/04* (2023.01)

(52) Cooperative Patent Classification (CPC):
**H04B 7/0452; H04L 5/00; H04W 72/04;
H04W 72/0453**

(86) International application number:
**PCT/CN2023/073086**

(87) International publication number:
**WO 2023/143353 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.01.2022  CN 202210090244
09.09.2022  CN 202211103535
21.10.2022  CN 202211297196

(71) Applicant: **VIVO MOBILE COMMUNICATION CO.,
LTD.**
**Dongguan, Guangdong 523863 (CN)**

(72) Inventors:
• **ZHENG, Kaili**
**Dongguan, Guangdong 523863 (CN)**
• **TAMRAKAR, Rakesh**
**Dongguan, Guangdong 523863 (CN)**
• **LIU, Hao**
**Dongguan, Guangdong 523863 (CN)**

(74) Representative: **Murgitroyd & Company**
**165-169 Scotland Street**
**Glasgow G5 8PL (GB)**

(54) **DMRS GENERATION METHOD, AND TERMINAL AND NETWORK-SIDE DEVICE**

(57)    Embodiments of this application pertain to the field of communication technologies, and disclose a DMRS generation method, a terminal, and a network-side device. The DMRS generation method in the embodiments of this application includes: mapping, by a communication device, an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

200

A communication device maps an FD-OCC sequence with a length of L to L subcarriers, where the L subcarriers are specific subcarriers corresponding to N DMRS ports, the FD-OCC sequence is used for CDM of the N DMRS ports, and the N DMRS ports belong to a CDM group — S202

FIG. 2

## Description

### CROSS-REFERENCE TO RELATED APPLICATION

The present invention claims priority to Chinese Patent Application No. 202210090244.8, filed with the China National Intellectual Property Administration on January 25, 2022, and entitled "DMRS GENERATION METHOD, TERMINAL, AND NETWORK-SIDE DEVICE", Chinese Patent Application No. 202211103535.2, filed with the China National Intellectual Property Administration on September 9, 2022, and entitled "DMRS GENERATION METHOD, TERMINAL, AND NETWORK-SIDE DEVICE", and Chinese Patent Application No. 202211297196.6, filed with the China National Intellectual Property Administration on October 21, 2022, and entitled "DMRS GENERATION METHOD, TERMINAL, AND NETWORK-SIDE DEVICE", all of which are incorporated herein by reference in their entireties.

### TECHNICAL FIELD

This application pertains to the field of communication technologies, and specifically relates to a DMRS generation method, a terminal, and a network-side device.

### BACKGROUND

In a 5G new radio (New Radio, NR) system, a demodulation reference signal (Demodulation Reference Signal, DMRS) is mainly used for channel estimation. DMRSs may be classified into a DMRS configuration type 1 and a DMRS configuration type 2. Both the DMRS configuration type 1 and the DMRS configuration type 2 support a single-symbol structure and a double-symbol structure. For the DMRS configuration type 1, the single-symbol structure supports a maximum of four DMRS ports, and the double-symbol structure supports a maximum of eight DMRS ports. For the DMRS configuration type 2, the single-symbol structure supports a maximum of six DMRS ports, and the double-symbol structure supports a maximum of 12 DMRS ports. Because the DMRS supports a maximum of 12 DMRS ports, a quantity of users multiplexed in multi-user multiple-input multiple-output (Multi-User Multiple-Input Multiple-Output, MU-MIMO) is limited. Therefore, more DMRS ports need to be introduced to increase the quantity of users and a quantity of data streams in MU-MIMO.

### SUMMARY

Embodiments of this application provide a DMRS generation method, a terminal, and a network-side device to resolve a problem that a quantity of multiplexed users is limited because a quantity of DMRS ports supported by a DMRS is limited in the related art.

According to a first aspect, a DMRS generation method is provided and includes: mapping, by a communication device, an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

According to a second aspect, a DMRS generation apparatus is provided and includes: a processing module, configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

According to a third aspect, a terminal is provided. The terminal includes a processor and a memory. A program or instructions are stored in the memory and executable on the processor. When the program or instructions are executed by the processor, steps of the method according to the first aspect are implemented.

According to a fourth aspect, a terminal is provided and includes a processor and a communication interface. The processor is configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

According to a fifth aspect, a network-side device is provided. The network-side device includes a processor and a memory. A program or instructions are stored in the memory and executable on the processor. When the program or instructions are executed by the processor, the steps of the method according to the first aspect are implemented.

According to a sixth aspect, a network-side device is provided and includes a processor and a communication interface. The processor is configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

According to a seventh aspect, a DMRS generation system is provided and includes a terminal and a network-side device. The terminal may be configured to perform the steps of the method according to the first aspect. The network-side device may be configured to perform the steps of the method according to the first aspect.

According to an eighth aspect, a readable storage medium is provided. The readable storage medium stores a program or instructions. When the program or instructions are executed by a processor, the steps of the method according to the first aspect are implemented.

According to a ninth aspect, a chip is provided. The chip includes a processor and a communication interface. The communication interface is coupled to the processor. The processor is configured to run a program or instructions to implement the steps of the method according to the first aspect.

According to a tenth aspect, a computer program or program product is provided. The computer program or program product is stored in a storage medium. The computer program or program product is executed by at least one processor to implement the steps of the method according to the first aspect.

In the embodiments of this application, the communication device maps the FD-OCC sequence with the length of L to the L subcarriers, where the L subcarriers are the specific subcarriers corresponding to the N DMRS ports, the FD-OCC sequence is used for CDM of the N DMRS ports, and the N DMRS ports belong to one CDM group. Because L is greater than 2, the embodiments of this application are equivalent to further extending a quantity of DMRS ports by extending the length of the FD-OCC sequence. This helps increase a quantity of users in MU-MIMO to support more data streams. Therefore, a feasible solution is provided for more users multiplexed in MU-MIMO, and performance of the communication system is improved.

**BRIEF DESCRIPTION OF DRAWINGS**

FIG. 1 is a schematic diagram of a wireless communication system according to an embodiment of this application;
FIG. 2 is a schematic flowchart of a DMRS generation method according to an embodiment of this application;
FIG. 3 is a schematic diagram of four selected specific subcarriers according to an embodiment of this application;
FIG. 4 is a schematic diagram of four selected specific subcarriers according to an embodiment of this application;
FIG. 5 is a schematic diagram of four selected specific subcarriers according to an embodiment of this application;
FIG. 6 is a schematic diagram of four selected specific subcarriers according to an embodiment of this application;
FIG. 7 is a schematic diagram of four selected specific subcarriers according to an embodiment of this application;
FIG. 8 is a schematic diagram of four selected specific subcarriers according to an embodiment of this application;
FIG. 9 is a schematic diagram of four selected specific subcarriers according to an embodiment of this application;
FIG. 10 is a schematic diagram of four selected specific subcarriers according to an embodiment of this application;
FIG. 11 is a schematic diagram of six selected specific subcarriers according to an embodiment of this application;
FIG. 12 is a schematic diagram of six selected specific subcarriers according to an embodiment of this application;
FIG. 13 is a schematic diagram of a structure of a DMRS generation apparatus according to an embodiment of this application;
FIG. 14 is a schematic diagram of a structure of a communication device according to an embodiment of this application;
FIG. 15 is a schematic diagram of a structure of a terminal according to an embodiment of this application; and
FIG. 16 is a schematic diagram of a structure of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

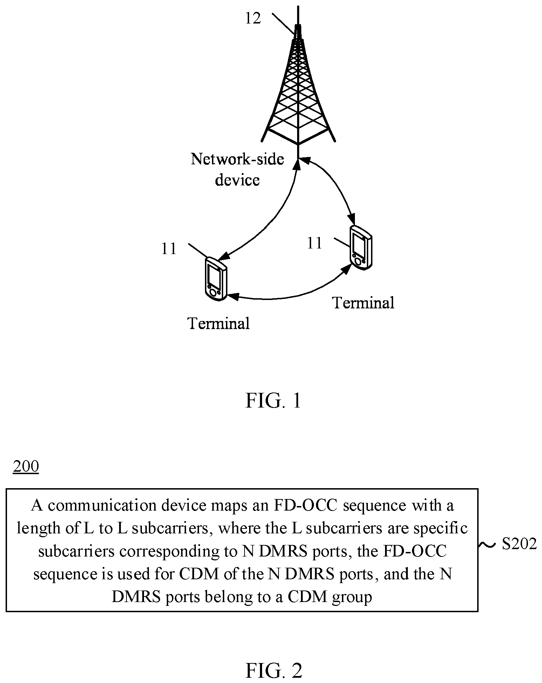

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A DMRS generation method provided in the embodiments of this application is hereinafter described in detail by using some embodiments and application scenarios thereof with reference to the accompanying drawings.

As shown in FIG. 2, an embodiment of this application provides a DMRS generation method 200. The method may be performed by a terminal or a network-side device. In other words, the method may be performed by software or hardware installed in the terminal or the network-side device. The method includes the following step.

S202. A communication device maps a frequency division-orthogonal cover code (Frequency Division-Orthogonal Cover Code, FD-OCC) sequence with a length of L to L subcarriers, where the L subcarriers are specific subcarriers corresponding to N DMRS ports, the FD-OCC sequence is used for CDM of the N DMRS ports, the N DMRS ports belong to a code division multiplexing (Code Division Multiplexing, CDM) group, L and N are positive integers, and L is greater than 2.

The communication device mentioned in each embodiment of this application may be a terminal or a network-side device.

For example, in a case that the communication device is the network-side device, after S202, the following step may be further included: the communication device simultaneously sends DMRSs through the N DMRS ports; or in a case that the communication device is the terminal, after S202, the following step may be further included: the communication device simultaneously receives DMRSs through the N DMRS ports. For example, the terminal performs channel estimation by using the DMRSs of the N DMRS ports.

For another example, in a case that the communication device is the terminal, after S202, the following step may be further included: the communication device simultaneously sends DMRSs through the N DMRS ports; or in a case that the communication device is the network-side device, after S202, the following step may be further included: the communication device simultaneously receives DMRSs through the N DMRS ports. For example, the network-side device performs channel estimation by using the DMRSs of the N DMRS ports.

In this embodiment, each of the N DMRS ports corresponds to the L specific subcarriers, that is, the L specific subcarriers corresponding to the N DMRS ports are the same. The "L specific subcarriers" mentioned herein may be L subcarriers selected from more than L subcarriers.

Optionally, the length L of the FD-OCC sequence is related to a type of DMRS, where in a case that the type of DMRS is DMRS configuration type 1 (DMRS configuration type 1), a value of L may be 3, 4, or 6; or in a case that the type of DMRS is DMRS configuration type 2 (DMRS configuration type 2), a value of L may be 4.

This embodiment may further extend a quantity of DMRS ports by introducing the FD-OCC sequence with the length of 3, 4, or 6, so that the DMRS of the DMRS configuration type 1 can support up to 16 DMRS ports, and that the DMRS of the DMRS configuration type 2 can support up to 24 DMRS ports, thereby providing a feasible solution for more users multiplexed in MU-MIMO.

In the DMRS generation method provided in this embodiment of this application, the communication device maps the FD-OCC sequence with the length of L to the L subcarriers, where the L subcarriers are the specific subcarriers corresponding to the N DMRS ports, the FD-OCC sequence is used for CDM of the N DMRS ports, and the N DMRS ports belong to one CDM group. Because L is greater than 2, this embodiment of this application is equivalent to further extending the quantity of DMRS ports by extending the length of the FD-OCC sequence. This helps increase a quantity of users in MU-MIMO to support more data streams. Therefore, a feasible solution is provided for more users multiplexed in MU-MIMO, and performance of a communication system is improved.

Optionally, the L subcarriers mentioned in Embodiment 200 meet at least one of the following (1) to (4):

(1) being L subcarriers with continuous relative indexes, where the relative indexes correspond to one CDM group. In other words, the relative indexes refer to subcarrier indexes in one CDM group, and may not be absolute indexes. For example, using 12 subcarriers of one resource block (Resource Block, RB) as an example, indexes (that is, absolute indexes) are 1 to 12 respectively. For six subcarriers with absolute indexes of 1, 3, 5, 7, 9, and 11 and corresponding to DMRSs in one CDM group, the relative indexes mentioned herein refer to relative indexes of the six subcarriers in one CDM group. For example, rearranged relative indexes are 1, 2, 3, 4, 5, and 6.

(2) being L subcarriers determined according to a preset rule, where the preset rule may be a rule agreed by the network-side device and a terminal side by default.

(3) being L subcarriers configured or indicated by the network-side device in a form of a bitmap. And,

(4) being L subcarriers other than unused subcarriers configured or indicated by the network-side device.

Optionally, in the foregoing examples, the network-side device configures or indicates a first subcarrier among the L subcarriers. In this example, the L subcarriers may be L subcarriers with continuous relative indexes; or may be L subcarriers with an interval between relative indexes, so that the network-side device can further indicate an interval value of the relative indexes.

In this example, in a case that the communication device is the network-side device, Embodiment 200 may further include the following step: the network-side device sends signaling information, where the signaling information is used to configure or indicate the first subcarrier among the L subcarriers; or in a case that the communication device is the terminal, Embodiment 200 may further include the following step: the terminal receives signaling information, where the signaling information is used to configure or indicate the first subcarrier among the L subcarriers. Optionally, a relative index of the first subcarrier may be configured or indicated in a form of an offset (offset) of a subcarrier index.

As mentioned in Embodiment 200, in a case that the type of DMRS is DMRS configuration type 1, the value of L is 3, 4, or 6; or in a case that the type of DMRS is DMRS configuration type 2, the value of L is 4. Details are hereinafter described with reference to several examples.

In an embodiment, in a case that the type of DMRS is DMRS configuration type 1 and that the value of L is 4, the L subcarriers may be one of the following (1) and (2):

(1) Four of K subcarriers corresponding to one CDM group in an RB, where K is a positive integer and K is greater than L. Optionally, K = 6, that is, the L subcarriers are four of six subcarriers corresponding to one CDM group in the RB.

(2) Four of K×M subcarriers corresponding to one CDM group in M RBs, where M is a positive integer and M is greater than 1. Optionally, K = 6.

In a case of the foregoing (1), that is, in a case that the L subcarriers are four of the K subcarriers corresponding to one CDM group in the RB, the L subcarriers may be one of the following (a) to (g):

(a) First four subcarriers in an ascending order of relative indexes. For example, K = 6. In this example, the L subcarriers are four subcarriers with relative indexes of 1, 2, 3, and 4 respectively.

(b) First four subcarriers in a descending order of relative indexes. For example, K = 6. In this example, the L subcarriers are four subcarriers with relative indexes of 3, 4, 5, and 6 respectively.

(c) First two subcarriers with largest relative indexes and first two subcarriers with smallest relative indexes. For example, K = 6. In this example, the L subcarriers are four subcarriers with relative indexes of 1, 2, 5, and 6 respectively.

(d) First two subcarriers in an ascending order of relative indexes among first K/2 subcarriers in an ascending order of relative indexes and first two subcarriers in an ascending order of relative indexes among last K/2 subcarriers in an ascending order of relative indexes. For example, K = 6. In this example, the L subcarriers are four subcarriers with relative indexes of 1, 2, 4, and 5 respectively.

(e) Last two subcarriers in an ascending order of relative indexes among the first K/2 subcarriers in the ascending order of relative indexes and last two subcarriers in an ascending order of relative indexes among the last K/2 subcarriers in the ascending order of relative indexes. For example, K = 6. In this example, the L subcarriers are four subcarriers with relative indexes of 2, 3, 5, and 6 respectively.

(f) One subcarrier with a smallest relative index and one subcarrier with a largest relative index among the first K/2 subcarriers in the ascending order of relative indexes and one subcarrier with a smallest relative index and one subcarrier with a largest relative index among the last K/2 subcarriers in the ascending order of relative indexes. For example, K = 6. In this example, the L subcarriers are four subcarriers with relative indexes of 1, 3, 4, and 6 respectively.

(g) The last two subcarriers in the ascending order of relative indexes among the first K/2 subcarriers in the ascending order of relative indexes and the first two subcarriers in the ascending order of relative indexes among the last K/2 subcarriers in the ascending order of relative indexes. For example, K = 6. In this example, the L subcarriers are four subcarriers with relative indexes of 2, 3, 4, and 5 respectively.

The relative indexes in the foregoing examples correspond to one CDM group.

In a case of the foregoing (2), the L subcarriers are L of the K×M subcarriers corresponding to one CDM group in the M RBs, where the K×M subcarriers are divided into (K×M÷L) parts, and there are L subcarriers in each part. In this example, the K×M subcarriers may be evenly divided into (K×M÷L) parts.

In this embodiment, relative indexes of the L subcarriers are adjacent; or an interval between relative indexes of the L subcarriers is P, where P is a positive integer, and the relative indexes correspond to one CDM group.

In this embodiment, for example, K = 6, and L = 4. L = 4 specific subcarriers are four of 6M subcarriers corresponding to one CDM group in the M RBs. The 6M subcarriers may be divided into 6M/4 parts, and there are four subcarriers in each part, where there are four subcarriers with adjacent relative indexes in each part; or there are four subcarriers with an interval P between relative indexes of the subcarriers in each part.

Optionally, a value of M meets at least one of the following:

(1) The value is agreed by the network-side device and the terminal side by default, and for example, may be 2 or 4.

(2) The value is configured or indicated by the network-side device. In this example, in a case that the communication device is the network-side device, Embodiment 200 may further include the following step: the network-side device sends signaling information, where the signaling information is used to configure or indicate the value of M; or in a case that the communication device is the terminal, Embodiment 200 may further include the following step: the terminal receives signaling information, where the signaling information is used to configure or indicate the value of M.

(3) The value is consistent with a granularity of a precoding resource block group (Precoding Resource Block Group, PRG). And,

(4) The value is an integer multiple of 2.

In an embodiment, the L subcarriers are L of the K×M subcarriers corresponding to one CDM group in the M RBs, where a bandwidth of a data channel scheduled by the network-side device for the terminal meets at least one of the following (1) to (4) that:

(1) A quantity of RBs in the bandwidth is an integer multiple of M.

(2) A difference between a start RB position of the bandwidth and a common RB (CRB) 0 is an integer multiple of M or 0. For example, differences between start RB positions of bandwidths of scheduled resources corresponding to a plurality of terminals multiplexed in MU-MIMO and the CRB 0 are all integer multiples of M or 0.

(3) A difference between the start RB position of the bandwidth and a start RB position of a bandwidth part (Bandwidth Part, BWP) in which the bandwidth is located is an integer multiple of M or 0. For example, differences between start RB positions of bandwidths of scheduled resources corresponding to a plurality of terminals multiplexed in MU-MIMO and a start RB position of a BWP in which the scheduled resources are located are all integer multiples of M or 0.

(4) A difference between start RB positions of data channels scheduled by a plurality of terminals corresponding to the N DMRS ports is an integer multiple of M or 0. For example, a difference between start positions of bandwidths of scheduled resources corresponding to terminals multiplexed in MU-MIMO is an integer multiple of M or 0.

(5) A quantity of RBs corresponding to each continuous RB segment in the bandwidth is an integer multiple of M. For example, when the bandwidth of the data channel scheduled for the terminal is discontinuous, that is, when the bandwidth includes a plurality of sub-segments, where each sub-segment includes continuous RBs, a quantity of RBs corresponding to each sub-segment is an integer multiple of M. And,

(6) A difference between a start RB position of each continuous RB segment in the bandwidth and the CRB 0 is an integer multiple of M or 0. For example, when the bandwidth of the data channel scheduled for the terminal is discontinuous, that is, when the bandwidth includes a plurality of sub-segments, where each sub-segment includes continuous RBs, a difference between a start RB position of each sub-segment and the CRB 0 is an integer multiple of M or 0.

When a PRG of the data channel scheduled by the network-side device for the terminal is 2 or 4 or wideband, the bandwidth meets at least one of (1) to (6).

In an embodiment, the data channel is a physical downlink shared channel (Physical Downlink Shared Channel, PDSCH). When the network-side device sets a transmission mode of the PDSCH to "fdmSchemeA" and indicates two transmission configuration indicator (Transmission Configuration Indicator, TCI) states to the terminal by using downlink control information (Downlink Control Information, DCI), the PDSCH received by the terminal meets at least one of (1) to (6). The PDSCH includes two non-overlapping frequency domain resource allocations, where each frequency domain resource allocation corresponds to one TCI state, and each frequency domain resource allocation of the PDSCH also meets at least one of (1) to (6). For example, a quantity of RBs corresponding to each continuous RB segment in each frequency domain resource allocation is an even number, and a difference between a start RB position of each continuous RB segment in each frequency domain resource allocation and the CRB 0 is an even number; or a quantity of RBs corresponding to each continuous RB segment in each frequency domain resource allocation is an even number, and a difference between a start RB position of each frequency domain resource allocation and the CRB 0 is an even number. When the network-side device sets the transmission mode of the PDSCH to "fdmSchemeB" and indicates two TCI states to the terminal by using DCI, two PDSCHs received by the terminal both meet at least one of (1) to (6), where the two PDSCHs do not overlap each other, and each PDSCH corresponds to one TCI state. It should be noted that the PDSCH may also be understood as a PDSCH transmission opportunity.

In addition, whether the data channel scheduled by the network-side device for the terminal needs to meet at least one of constraints in (1) to (6) depends on a capability of the terminal. The terminal may report whether the terminal supports receiving scheduling of the data channel without the constraint. For example, if the terminal reports that the terminal supports receiving scheduling of the PDSCH without the constraint, the PDSCH scheduled by the network-side device for the terminal does not need to meet the constraint; or if the terminal reports that the terminal does not support receiving scheduling of the PDSCH without the constraint, the PDSCH scheduled by the network-side device for the terminal needs to meet at least one of the constraints in (1) to (6).

Optionally, the L subcarriers are L of the K subcarriers corresponding to one CDM group in the RB; and a ratio of energy per resource element (Energy Per Resource Element, EPRE) of a data channel to EPRE of the DMRS meets at least one of the following that:

(1) when one CDM group is not occupied by data, the ratio of the EPRE of the data channel to the EPRE of the DMRS is 0 dB; and
(2) when two CDM groups are not occupied by data, the ratio of the EPRE of the data channel to the EPRE of the DMRS is -4.77 dB, that is, the ratio between the two is 1:3.

The data channel mentioned in the foregoing examples may be the PDSCH or may be a physical uplink shared channel (Physical Uplink Shared Channel, PUSCH).

Optionally, in a case that the type of DMRS is DMRS configuration type 1 and that the value of L is 3 or 6, the L subcarriers are L subcarriers corresponding to one CDM group in the RB; or in a case that the type of DMRS is DMRS configuration type 2 and that the value of L is 4, the L subcarriers are L subcarriers corresponding to one CDM group in the RB.

Optionally, in the foregoing embodiments, in a case that the DMRS has a double-symbol structure, the FD-OCC sequence with the length of L is used in combination with a time division-orthogonal cover code TD-OCC sequence with a length of J, where J is a positive integer. In this embodiment, for example, an OCC sequence corresponding to the DMRS is a product of the FD-OCC sequence and the TD-OCC sequence, where j is a positive integer and j is greater than 1, for example, J = 2.

Optionally, in the foregoing embodiments, the FD-OCC sequence with the length of L acts on the N DMRS ports as a first capability of a terminal, where a terminal that does not support the first capability and a terminal that supports the first capability support (or may perform) MU-MIMO multiplexing.

The terminal that does not support the first capability and the terminal that supports the first capability meet at least one of the following (1) to (3) that:

(1) MU-MIMO multiplexing is performed in a form of frequency division multiplexing FDM on DMRS ports corresponding to the terminal that does not support the first capability and the terminal that supports the first capability. In this example, the DMRS ports corresponding to the terminal that does not support the first capability and the terminal that supports the first capability belong to different CDM groups.

(2) MU-MIMO multiplexing is performed in a form of time division multiplexing TDM on the DMRS ports corresponding to the terminal that does not support the first capability and the terminal that supports the first capability. And,

(3) MU-MIMO multiplexing is performed in a form of CDM on the DMRS ports corresponding to the terminal that does not support the first capability and the terminal that supports the first capability. In this example, the DMRS ports corresponding to the terminal that does not support the first capability and the terminal that supports the first capability belong to a same CDM group.

In an embodiment, MU-MIMO multiplexing is performed in the form of CDM on the DMRS ports corresponding to the terminal that does not support the first capability and the terminal that supports the first capability. An FD-OCC sequence of the DMRS port of the terminal that does not support the first capability and an FD-OCC sequence of the DMRS port of the terminal that supports the first capability are mutually orthogonal. For example, the terminal that does not support the first capability is a terminal 1, and the terminal that supports the first capability is a terminal 2. A DMRS port of the terminal 1 uses an FD-OCC sequence with a length of 2, and a DMRS port of the terminal 2 uses an FD-OCC sequence with a length of 4. A sub-sequence including first two elements of the FD-OCC sequence with the length of 4, used by the terminal 2, is orthogonal to the FD-OCC sequence with the length of 2 that is used by the DMRS port of the terminal 1; and a sub-sequence including last two elements of the FD-OCC sequence with the length of 4, used by the terminal 2, is also orthogonal to the FD-OCC sequence with the length of 2 that is used by the DMRS port of the terminal 1.

Optionally, in the foregoing embodiments, the FD-OCC sequence meets one of the following: lowest cross correlation between sequences; and mutual orthogonality between sequences.

Optionally, in the foregoing embodiments, the FD-OCC sequence may be at least one of the following:

(1) a computer generated sequence (Computer Generated Sequence, CGS);
(2) a discrete Fourier transform (Discrete Fourier Transform, DFT) sequence;
(3) a sequence whose elements are binary phase shift keying (Binary Phase Shift Keying, BPSK) symbols;
(4) a sequence whose elements are orthogonal phase shift keying (Orthogonal Phase Shift Keying, QPSK) symbols;
(5) a sequence whose elements are 6PSK symbols;
(6) a sequence whose elements are 8PSK symbols;
(7) a sequence whose elements include 1 and -1; and
(8) a sequence whose elements include 1, -1, an imaginary number j, and an imaginary number -j.

For example, the FD-OCC sequence may be a sequence whose elements include at least one of BPSK symbols, QPSK symbols, 6PSK symbols, 8PSK symbols, 1, -1, j, and -j.

The DMRS generation method provided in the embodiments of this application is hereinafter described in detail with reference to several specific embodiments.

Embodiment 1

This embodiment is used to describe specific forms of an FD-OCC sequence and a TD-OCC sequence when a type of a DMRS is a DMRS configuration type 1 and a length of the FD-OCC sequence is 4. FD-OCC and TD-OCC sequences are generated based on a criterion of lowest cross correlation, a criterion of mutual orthogonality, or the like.

In a case that the DMRS has a single-symbol structure, FD-OCC sequences corresponding to four DMRS ports in a CDM group (group) are:

a first FD-OCC sequence: $[1\ 1\ 1\ 1]^T$;
a second FD-OCC sequence: $[1\ -1\ 1\ -1]^T$;
a third FD-OCC sequence: $[1\ 1\ -1\ -1]^T$; and
a fourth FD-OCC sequence: $[1\ -1\ -1\ 1]^T$.

Each of the first, second, third, and fourth FD-OCC sequences corresponds to one of the four DMRS ports. The following should be noted:

(1) The FD-OCC sequences may also be results of multiplying the first, second, third, and fourth FD-OCC sequences by -1 or j or -j.
(2) The first, second, third, and fourth FD-OCC sequences may also be other forms of sequences generated based on the criterion of lowest cross correlation, the criterion of mutual orthogonality, or the like, for example, four DFT sequences with lengths of 4, corresponding to four column vectors of a fourth-order DFT matrix.

Element values of a plurality of FD-OCC sequences described in this embodiment correspond to L = 4 specific subcarriers, but element values of corresponding FD-OCC sequences on the specific subcarriers may be a result of unified exchange of element indexes of the four FD-OCC sequences listed in this embodiment. For example, values of first elements and fourth elements of the first, second, third, and fourth FD-OCC sequences are exchanged in a unified manner. FD-OCC sequences after the exchange are:

a first FD-OCC sequence: $[1\ 1\ 1\ 1]^T$;
a second FD-OCC sequence: $[-1\ -1\ 1\ 1]^T$;
a third FD-OCC sequence: $[-1\ 1\ -1\ 1]^T$; and
a fourth FD-OCC sequence: $[1\ -1\ -1\ 1]^T$.

In a case that the DMRS has a double-symbol structure, FD-OCC sequences corresponding to eight DMRS ports in a CDM group are FD-OCC sequences listed above.
TD-OCC sequences corresponding to the eight DMRS ports in one CDM group are:

a first TD-OCC sequence: $[1\ 1]^T$; and
a second TD-OCC sequence: $[1\ -1]^T$.

It should be noted that the first and second TD-OCC sequence may be other forms of sequences generated based on the criterion of lowest cross correlation, the criterion of mutual orthogonality, or the like.
The foregoing description may be expressed in the following table, and may be used for a PDSCH and a PUSCH:

| $p$ | CDM group $\lambda$ | FD-OCC | | | | TD-OCC | |
|---|---|---|---|---|---|---|---|
| | | Subcarrier 1 | Subcarrier 2 | Subcarrier 3 | Subcarrier 4 | DMRS symbol 1 | DMRS symbol 2 |
| Port 0 | 0 | +1 | +1 | +1 | +1 | +1 | +1 |
| Port 1 | 0 | +1 | -1 | +1 | -1 | +1 | +1 |
| Port 2 | 0 | +1 | +1 | -1 | -1 | +1 | +1 |
| Port 3 | 0 | +1 | -1 | -1 | +1 | +1 | +1 |
| Port 4 | 0 | +1 | +1 | +1 | +1 | +1 | -1 |
| Port 5 | 0 | +1 | -1 | +1 | -1 | +1 | -1 |
| Port 6 | 0 | +1 | +1 | -1 | -1 | +1 | -1 |
| Port 7 | 0 | +1 | -1 | -1 | +1 | +1 | -1 |
| Port 8 | 1 | +1 | +1 | +1 | +1 | +1 | +1 |
| Port 9 | 1 | +1 | -1 | +1 | -1 | +1 | +1 |
| Port 10 | 1 | +1 | +1 | -1 | -1 | +1 | +1 |
| Port 11 | 1 | +1 | -1 | -1 | +1 | +1 | +1 |
| Port 12 | 1 | +1 | +1 | +1 | +1 | +1 | -1 |
| Port 13 | 1 | +1 | -1 | +1 | -1 | +1 | -1 |
| Port 14 | 1 | +1 | +1 | -1 | -1 | +1 | -1 |
| Port 15 | 1 | +1 | -1 | -1 | +1 | +1 | -1 |

Using the PDSCH as an example, for example, port numbers of the foregoing port 0 to port 15 are 1000, 1001, 1008, 1009, 1004, 1005, 1012, 1013, 1002, 1003, 1010, 1011, 1006, 1007, 1014, and 1015 respectively. In this case, a first manner is: mapping of the foregoing DMRS ports is expressed by the following formula:

$$a_{k,l}^{(p,\mu)} = \beta_{\text{PDSCH}}^{\text{DMRS}} w_{\text{f}}\left(k'\right) w_{\text{t}}\left(l'\right) r\left(4n+k'\right)$$

$$k = 8n + 2k' + \Delta$$

$$k' = 0, 1, 2, 3$$

$$l = \bar{l} + l'$$

$$n = 0, 1,$$

where $a_{k,l}^{(p,\mu)}$ is a DMRS sequence element for mapping port $p$ to a $k^{th}$ subcarrier and an $l^{th}$ symbol, $\beta_{PDSCH}^{DMRS}$ is a power factor of the DMRS, $w_f$ is an FD-OCC sequence, $w_t$ is a TD-OCC sequence, $r$ is a base sequence, and $\bar{l}$ is a prefix symbol index of the DMRS. Parameters in the foregoing formula are shown in the following parameter table:

| $p$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

A second manner is: mapping of DMRS ports with port numbers 1000 to 1007 is expressed by the following formula:

$$a_{k,l}^{(p,\mu)} = \beta_{PDSCH}^{DMRS} w_f(k') w_t(l') r(2n + k')$$

$$k = 4n + 2k' + \Delta$$

$$k' = 0, 1$$

$$l = \bar{l} + l'$$

$$n = 0, 1,$$

Parameters in the foregoing formula are shown in the following parameter table:

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Mapping of DMRS ports with port numbers 1008 to 1015 is expressed by the following formula:

$$a_{k,l}^{(p,\mu)} = \beta_{\text{PDSCH}}^{\text{DMRS}} w_f\left(k'\right) w_t\left(l'\right) r\left(4n + k'\right)$$

$$k = 8n + 2k' + \Delta$$

$$k' = 0, 1, 2, 3$$

$$l = \bar{l} + l'$$

$$n = 0, 1,$$

Parameters in the foregoing formula are shown in the following parameter table:

| $p$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

It should be noted that the FD-OCC sequences $w_f$ with lengths of 4 in the foregoing parameter tables are not limited to the four FD-OCC sequences in the parameter tables, and may also be the foregoing four DFT sequences with the lengths of 4, corresponding to four column vectors of the fourth-order DFT matrix.

For the PUSCH, port numbers of the foregoing port 0 to port 15 may be: 0, 1, 8, 9, 4, 5, 12, 13, 2, 3, 10, 11, 6, 7, 14, and 15. A mapping manner of DMRS ports may be the same as that of the PDSCH, that is, the formula and parameter table in the first manner or the second manner may be used. Details are not described herein again.

In the foregoing manner, the single-symbol structure of the DMRS configuration type 1 can map up to eight orthogonal DMRS ports; and the double-symbol structure of the DMRS configuration type 1 can map up to 16 orthogonal DMRS ports.

Embodiment 2

This embodiment is used to describe selection of L = 4 specific subcarriers corresponding to DMRS ports when a type of a DMRS is a DMRS configuration type 1 and a length of an FD-OCC sequence is 4. This embodiment uses a single-symbol structure and a CDM group 0 as an example, and is also applicable to a CDM group 1 and/or a double-symbol structure.

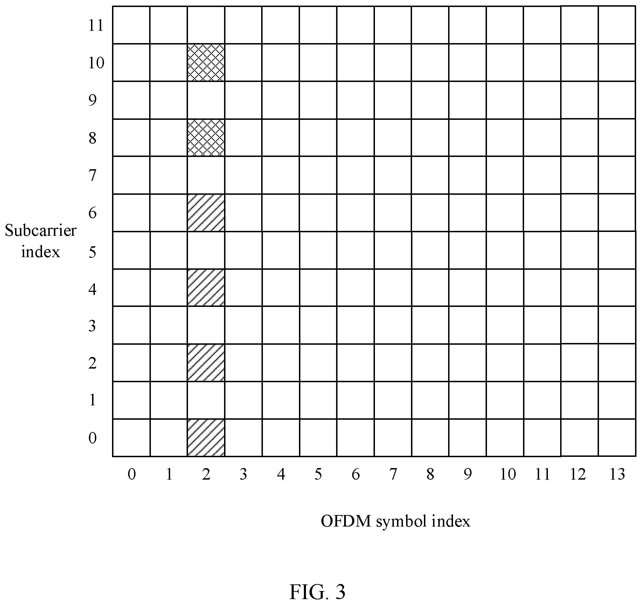

Example 1: First four subcarriers in ascending order of subcarrier indexes (relative indexes 1, 2, 3, and 4). As shown in FIG. 3, in this case, four DMRS ports are multiplexed on subcarriers with absolute indexes 0, 2, 4, and 6 (relative indexes 1, 2, 3, and 4) in one RB in a form of CDM.

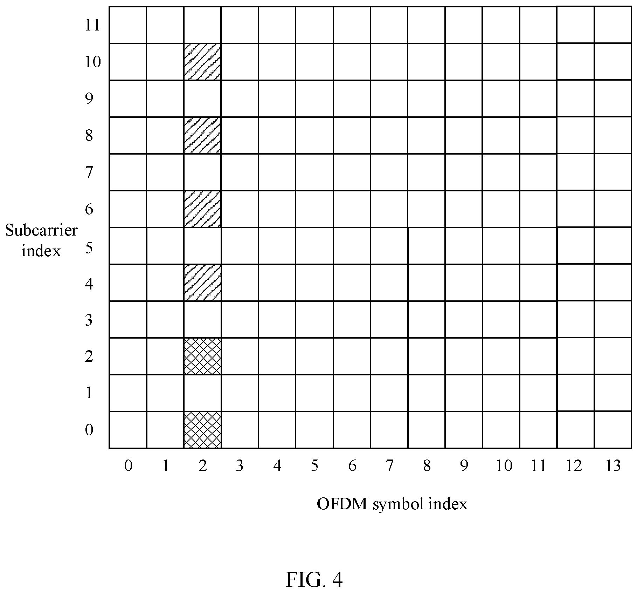

Example 2: First four subcarriers in descending order of subcarrier indexes (relative indexes 3, 4, 5, and 6). As shown in FIG. 4, in this case, four DMRS ports are multiplexed on subcarriers with absolute indexes 4, 6, 8, and 10 (relative indexes 3, 4, 5, and 6) in one RB in a form of CDM.

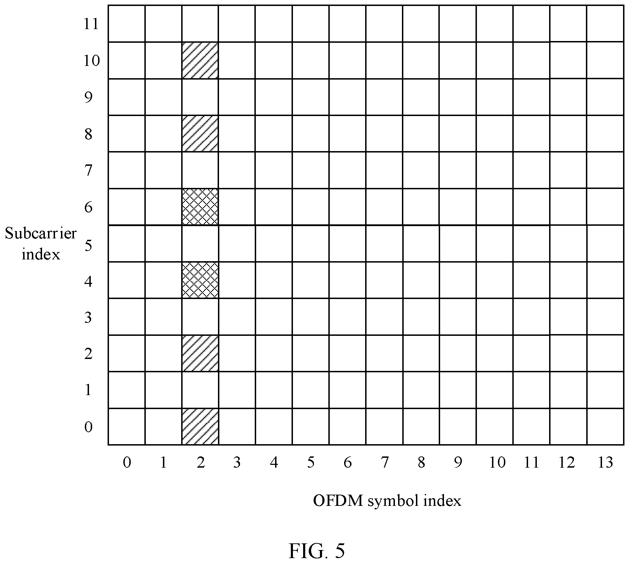

Example 3: First two subcarriers with largest subcarrier indexes and first two subcarriers with smallest subcarrier indexes (relative indexes 1, 2, 5, and 6). As shown in FIG. 5, in this case, four DMRS ports are multiplexed on subcarriers with absolute indexes 0, 2, 8, and 10 (relative indexes 1, 2, 5, and 6) in one RB in a form of CDM.

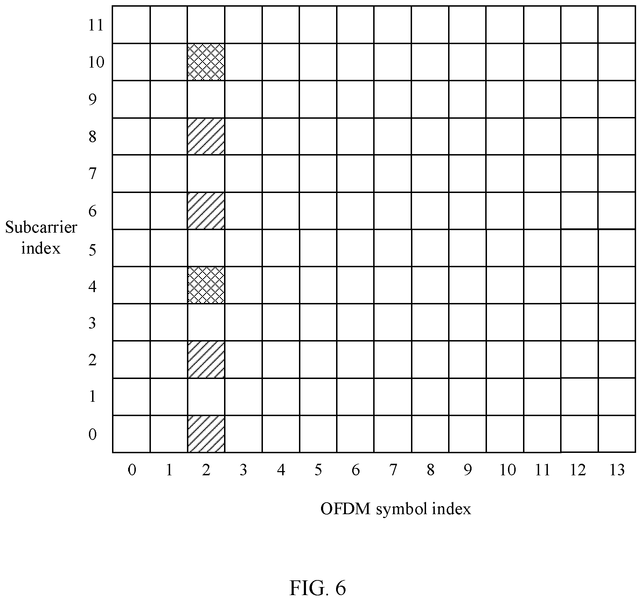

Example 4: Indexes 1, 2, 4, and 5. As shown in FIG. 6, in this case, four DMRS ports are multiplexed on subcarriers with absolute indexes 0, 2, 6, and 8 (relative indexes 1, 2, 4, and 5) in one RB in a form of CDM.

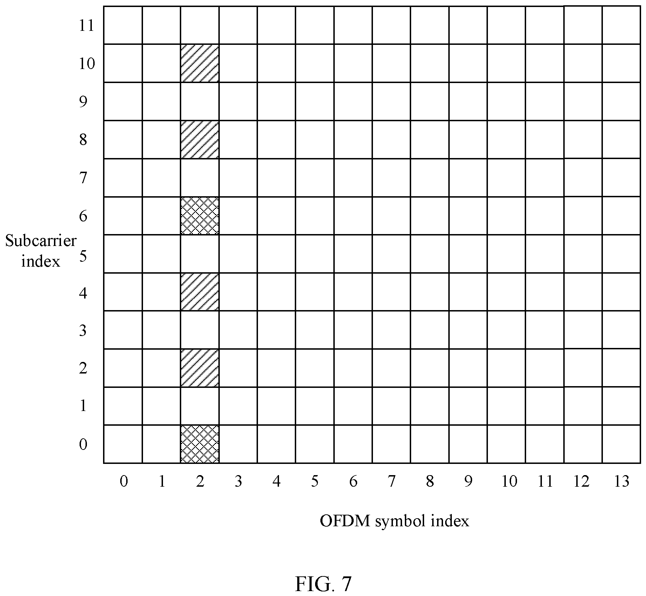

Example 5: Indexes 2, 3, 5, and 6. As shown in FIG. 7, in this case, four DMRS ports are multiplexed on subcarriers with absolute indexes 2, 4, 8, and 10 (relative indexes 2, 3, 5, and 6) in one RB in a form of CDM.

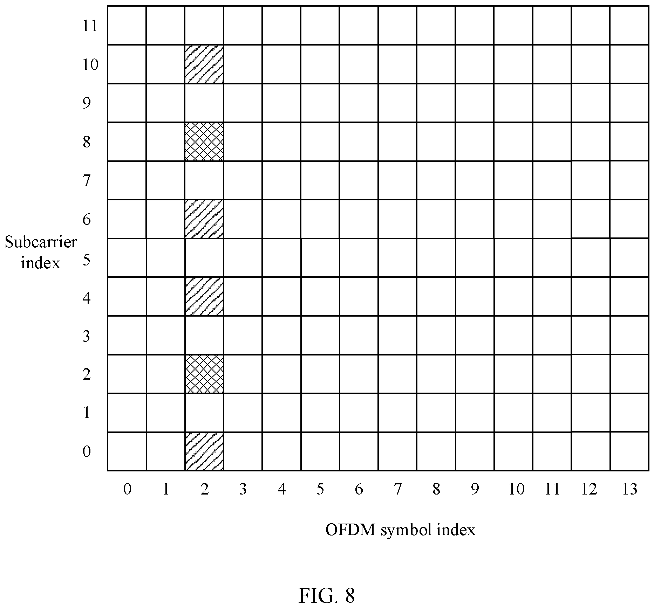

Example 6: Indexes 1, 3, 4, and 6. As shown in FIG. 8, in this case, four DMRS ports are multiplexed on subcarriers with absolute indexes 0, 4, 6, and 10 (relative indexes 1, 3, 4, and 6) in one RB in a form of CDM.

The following describes a method for selecting subcarriers. Selection of four specific subcarriers corresponding to the DMRS ports may be agreed by a network side and a terminal side by default, or may be configured by a network side. For example, the network side configures four specific subcarriers by using RRC signaling (in a form of a bitmap, six bits are used to correspond to six subcarriers in one RB, where a bit of 1 indicates that a corresponding subcarrier is selected, and a bit of 0 indicates that a corresponding subcarrier is not selected); or the network side configures a plurality of subcarrier groups by using radio resource control (Radio Resource Control, RRC) signaling, where each subcarrier group includes four subcarriers, and indicates a subcarrier group index by using a media access control control element (Media Access Control Control Element, MAC CE) and/or DCI. Alternatively, a plurality of subcarrier groups are agreed by the network side and the terminal side by default, and then a subcarrier group index is indicated by using RRC and/or a MAC CE and/or DCI.

Embodiment 3

This embodiment is used to describe a manner in which L = 4 specific subcarriers are four of 6M = 12 subcarriers corresponding to a CDM group in M = 2 RBs when a type of a DMRS is a DMRS configuration type 1 and a length of an FD-OCC sequence is 4.

This embodiment uses a single-symbol structure, a CDM group 0, and M = 2 as an example, and is also applicable to a CDM group 1, and/or M being another feasible value, and/or a double-symbol structure.

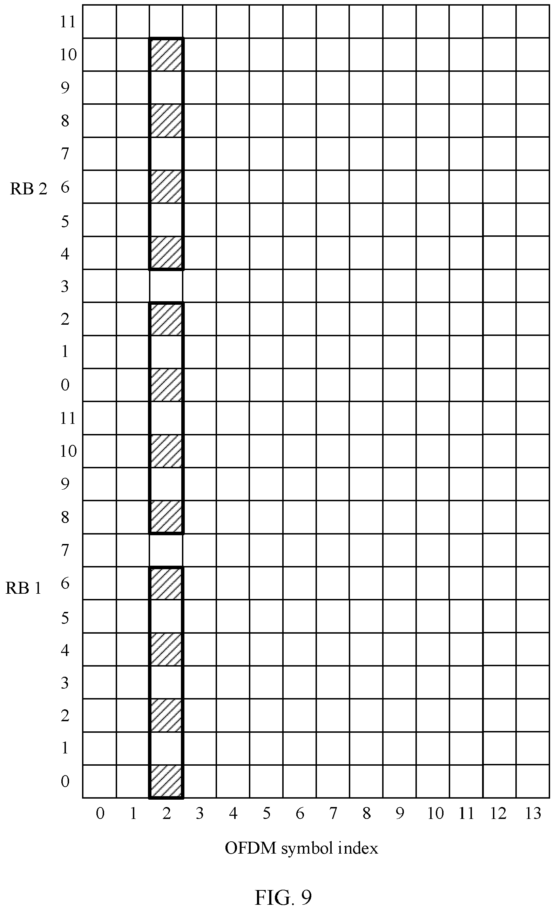

As shown in FIG. 9, in this embodiment, subcarriers 0, 2, 4, and 6 in an RB 1 correspond to an FD-OCC sequence with a length of 4 to implement CDM multiplexing of DMRS ports; subcarriers 8 and 10 in the RB 1 and subcarriers 0 and 2 in an RB 2 correspond to an FD-OCC sequence with a length of 4 to implement CDM multiplexing of DMRS ports; and subcarriers 4, 6, 8, and 10 in the RB 2 correspond to an FD-OCC sequence with a length of 4 to implement CDM multiplexing of DMRS ports. In other words, in this case, a function of an FD-OCC may be performed across RBs, and two RBs are used as a granularity of the function.

Embodiment 4

This embodiment is used to describe specific forms of an FD-OCC sequence and a TD-OCC sequence when a type of a DMRS is a DMRS configuration type 2 and a length of the FD-OCC sequence is 4. FD-OCC and TD-OCC sequences are generated based on a criterion of lowest cross correlation, a criterion of mutual orthogonality, or the like.

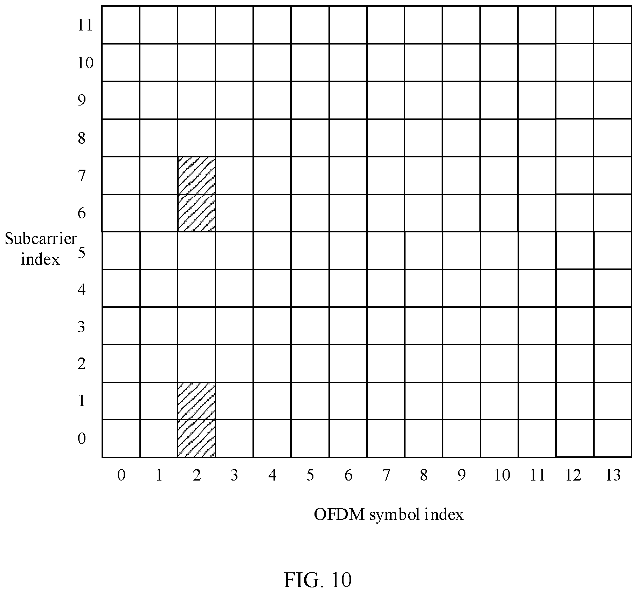

FIG. 10 uses a single-symbol structure and a CDM group 0 as an example, and is also applicable to a CDM group 1, a CDM group 2, and/or a double-symbol structure.

In FIG. 10, four DMRS ports are multiplexed in a form of CDM on subcarriers 0, 1, 6, and 7 corresponding to a CDM group 0 in one RB, corresponding to an FD-OCC sequence with a length of 4. Therefore, when DMRS ports are also mapped on CDM groups 1 and 2, up to 12 DMRS ports are mapped in the single-symbol structure and up to 24 DMRS ports are mapped in the double-symbol structure.

In a case that the DMRS has a single-symbol structure, FD-OCC sequences corresponding to four DMRS ports in a CDM group are:

a first FD-OCC sequence: $[1\ 1\ 1\ 1]^T$;
a second FD-OCC sequence: $[1\ -1\ 1\ -1]^T$;
a third FD-OCC sequence: $[1\ 1\ -1\ -1]^T$; and
a fourth FD-OCC sequence: $[1\ -1\ -1\ 1]^T$.

Each of the first, second, third, and fourth FD-OCC sequences corresponds to one of the four DMRS ports. The following should be noted:

(1) The FD-OCC sequences may also be results of multiplying the first, second, third, and fourth FD-OCC sequences by -1 or j or -j.
(2) The first, second, third, and fourth FD-OCC sequences may also be other forms of sequences generated based on the criterion of lowest cross correlation, the criterion of mutual orthogonality, or the like, for example, four DFT sequences with lengths of 4, corresponding to four column vectors of a fourth-order DFT matrix.

Element values of a plurality of FD-OCC sequences described in this embodiment correspond to L = 4 specific subcarriers, but element values of corresponding FD-OCC sequences on the specific subcarriers may be a result of unified exchange of element indexes of the four FD-OCC sequences listed in this embodiment. For example, values of first elements and fourth elements of the first, second, third, and fourth FD-OCC sequences are exchanged in a unified manner. FD-OCC sequences after the exchange are:

a first FD-OCC sequence: $[1\ 1\ 1\ 1]^T$;
a second FD-OCC sequence: $[-1\ -1\ 1\ 1]^T$;
a third FD-OCC sequence: $[-1\ 1\ -1\ 1]^T$; and
a fourth FD-OCC sequence: $[1\ -1\ -1\ 1]^T$.

In a case that the DMRS has a double-symbol structure, FD-OCC sequences corresponding to eight DMRS ports in a CDM group are FD-OCC sequences listed above.
TD-OCC sequences corresponding to the eight DMRS ports in one CDM group are:

a first TD-OCC sequence: $[1\ 1]^T$; and
a second TD-OCC sequence: $[1\ -1]^T$.

It should be noted that the first and second TD-OCC sequence may be other forms of sequences generated based on the criterion of lowest cross correlation, the criterion of mutual orthogonality, or the like.
The foregoing description may be expressed in the following table, and may be used for a PDSCH and a PUSCH:

| $p$ | CDM group $\lambda$ | $w_f(k')$ | | | | $w_t(l')$ | |
| --- | --- | --- | --- | --- | --- | --- | --- |
| | | Subcarrier 1 | Subcarrier 2 | Subcarrier 3 | Subcarrier 4 | DMRS symbol 1 | DMRS symbol 2 |
| Port 0 | 0 | +1 | +1 | +1 | +1 | +1 | +1 |
| Port 1 | 0 | +1 | -1 | +1 | -1 | +1 | +1 |
| Port 2 | 0 | +1 | +1 | -1 | -1 | +1 | +1 |
| Port 3 | 0 | +1 | -1 | -1 | +1 | +1 | +1 |
| Port 4 | 0 | +1 | +1 | +1 | +1 | +1 | -1 |
| Port 5 | 0 | +1 | -1 | +1 | -1 | +1 | -1 |
| Port 6 | 0 | +1 | +1 | -1 | -1 | +1 | -1 |
| Port 7 | 0 | +1 | -1 | -1 | +1 | +1 | -1 |
| Port 8 | 1 | +1 | +1 | +1 | +1 | +1 | +1 |
| Port 9 | 1 | +1 | -1 | +1 | -1 | +1 | +1 |
| Port 10 | 1 | +1 | +1 | -1 | -1 | +1 | +1 |
| Port 11 | 1 | +1 | -1 | -1 | +1 | +1 | +1 |

(continued)

| p | CDM group $\lambda$ | $w_f(k')$ | | | | $w_t(l')$ | |
|---|---|---|---|---|---|---|---|
| | | Subcarrier 1 | Subcarrier 2 | Subcarrier 3 | Subcarrier 4 | DMRS symbol 1 | DMRS symbol 2 |
| Port 12 | 1 | +1 | +1 | +1 | +1 | +1 | -1 |
| Port 13 | 1 | +1 | -1 | +1 | -1 | +1 | -1 |
| Port 14 | 1 | +1 | +1 | -1 | -1 | +1 | -1 |
| Port 15 | 1 | +1 | -1 | -1 | +1 | +1 | -1 |
| Port 16 | 2 | +1 | +1 | +1 | +1 | +1 | +1 |
| Port 17 | 2 | +1 | -1 | +1 | -1 | +1 | +1 |
| Port 18 | 2 | +1 | +1 | -1 | -1 | +1 | +1 |
| Port 19 | 2 | +1 | -1 | -1 | +1 | +1 | +1 |
| Port 20 | 2 | +1 | +1 | +1 | +1 | +1 | -1 |
| Port 21 | 2 | +1 | -1 | +1 | -1 | +1 | -1 |
| Port 22 | 2 | +1 | +1 | -1 | -1 | +1 | -1 |
| Port 23 | 2 | +1 | -1 | -1 | +1 | +1 | -1 |

Using the PDSCH as an example, for example, port numbers of the foregoing port 0 to port 23 are 1000, 1001, 1012, 1013, 1006, 1007, 1018, 1019, 1002, 1003, 1014, 1015, 1008, 1009, 1020, 1021, 1004, 1005, 1016, 1017, 1010, 1011, 1022, and 1023 respectively. In this case, a first manner is: mapping of the foregoing DMRS ports is expressed by the following formula:

$$a_{k,l}^{(p,\mu)} = \beta_{\mathrm{PDSCH}}^{\mathrm{DMRS}} w_f\left(k'\right) w_t\left(l'\right) r\left(4n+k'\right)$$

$$k = 12n + 2k' + \Delta$$

$$k' = 0,1,2,3$$

$$l = \bar{l} + l'$$

$$n = 0,1,$$

where $a_{k,l}^{(p,\mu)}$ is a DMRS sequence element for mapping port $p$ to a $k^{th}$ subcarrier and an $l^{th}$ symbol, $\beta_{\mathrm{PDSCH}}^{\mathrm{DMRS}}$ is a power factor of the DMRS, $w_f$ is an FD-OCC sequence, $w_t$ is a TD-OCC sequence, r is a base sequence, and $\bar{l}$ is a prefix symbol index of the DMRS. Parameters in the foregoing formula are shown in the following parameter table:

| p | CDM group $\lambda$ | $\Delta$ | $w_f(k')$ | | | | $w_t(l')$ | |
|---|---|---|---|---|---|---|---|---|
| | | | $k'=0$ | $k'=1$ | $k'=2$ | $k'=3$ | $l'=0$ | $l'=1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |

14

(continued)

| p | CDM group $\lambda$ | $\Delta$ | $w_f$ (k') | | | | $w_t$ (l') | |
|---|---|---|---|---|---|---|---|---|
| | | | k' = 0 | k' = 1 | k' = 2 | k' = 3 | l' = 0 | l' = 1 |
| 1007 | 0 | 0 | +1 | -1 | +1 | -1 | +1 | -1 |
| 1008 | 1 | 2 | +1 | +1 | -1 | -1 | +1 | -1 |
| 1009 | 1 | 2 | +1 | -1 | -1 | +1 | +1 | -1 |
| 1010 | 2 | 4 | +1 | +1 | -1 | -1 | +1 | -1 |
| 1011 | 2 | 4 | +1 | -1 | -1 | +1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

A second manner is: mapping of DMRS ports with port numbers 1000 to 1011 is expressed by the following formula:

$$a_{k,l}^{(p,\mu)} = \beta_{\text{PDSCH}}^{\text{DMRS}} w_f\left(k'\right) w_t\left(l'\right) r\left(2n+k'\right)$$

$$k = 6n + 2k' + \Delta$$

$$k' = 0,1$$

$$l = \bar{l} + l'$$

$$n = 0,1,$$

Parameters in the foregoing formula are shown in the following parameter table:

| p | CDM group $\lambda$ | $\Delta$ | $w_f$ (k') | | $w_t$(l') | |
|---|---|---|---|---|---|---|
| | | | k' = 0 | k' = 1 | l' = 0 | l' = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |

(continued)

| p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

Mapping of DMRS ports with port numbers 1012 to 1023 is expressed by the following formula:

$$a_{k,l}^{(p,\mu)} = \beta_{\text{PDSCH}}^{\text{DMRS}} w_f\left(k'\right) w_t\left(l'\right) r\left(4n + k'\right)$$

$$k = 12n + 2k' + \Delta$$

$$k' = 0, 1, 2, 3$$

$$l = \overline{l} + l'$$

$$n = 0, 1,$$

Parameters in the foregoing formula are shown in the following parameter table:

| p | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

It should be noted that the FD-OCC sequences $w_f$ with lengths of 4 in the foregoing parameter tables are not limited to the four FD-OCC sequences in the parameter tables, and may also be the foregoing four DFT sequences with the lengths of 4, corresponding to four column vectors of the fourth-order DFT matrix.

For the PUSCH, port numbers of the foregoing port 0 to port 23 may be 1000, 1001, 1012, 1013, 1006, 1007, 1018, 1019, 1002, 1003, 1014, 1015, 1008, 1009, 1020, 1021, 1004, 1005, 1016, 1017, 1010, 1011, 1022, and 1023. A mapping manner of DMRS ports may be the same as that of the PDSCH, that is, the formula and parameter table in the first manner or the second manner may be used. Details are not described herein again.

In the foregoing manner, the single-symbol structure of the DMRS configuration type 2 can map up to 12 orthogonal DMRS ports; and the double-symbol structure of the DMRS configuration type 2 can map up to 24 orthogonal DMRS ports.

Embodiment 5

This embodiment is used to describe L = 6 specific subcarriers corresponding to DMRS ports when a type of a DMRS is a DMRS configuration type 1 and a length of an FD-OCC sequence is 6. The following uses a single-symbol structure and a CDM group 0 as an example. This embodiment is also applicable to a CDM group 1 and/or a double-symbol structure.

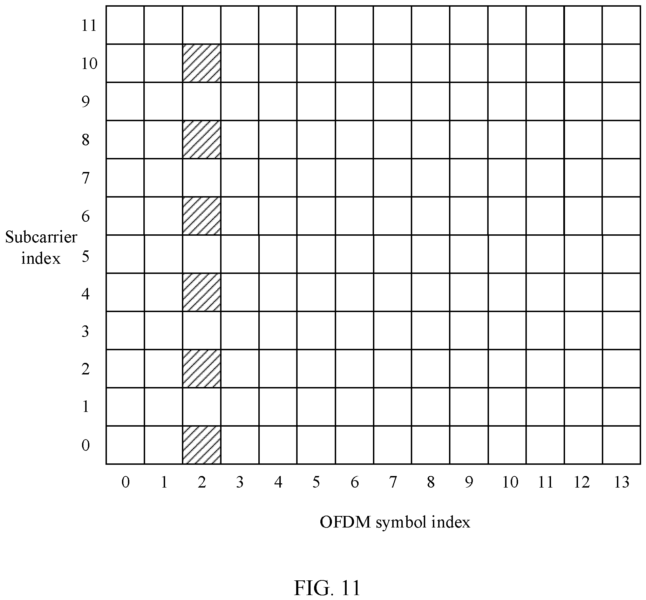

As shown in FIG. 11, in a case that the DMRS has a single-symbol structure, FD-OCC sequences corresponding to four DMRS ports in a CDM group are: four FD-OCC sequences with lengths of 6, which are generated based on a criterion of lowest cross correlation, a criterion of mutual orthogonality, or the like. Alternatively, four FD-OCC sequences with lengths of 6 are obtained in the following manner: Six FD-OCC sequences with lengths of 6 are generated based on a criterion of lowest cross correlation, a criterion of mutual orthogonality, or the like, and then four FD-OCC sequences with lengths of 6 are selected from the six FD-OCC sequences. Each of the four FD-OCC sequences with the lengths of 6 corresponds to one of the four DMRS ports in one CDM group.

For example, the FD-OCC sequences corresponding to the four DMRS ports in one CDM group are:

a first FD-OCC sequence: $[-1\ -1\ 1\ 1\ 1\ -1]^T$;
a second FD-OCC sequence: $[-1\ -1\ -1\ -1\ 1\ 1]^T$;
a third FD-OCC sequence: $[1\ -1\ 1\ -1\ 1\ -1]^T$; and
a fourth FD-OCC sequence: $[-1\ -1\ 1\ 1\ -1\ 1]^T$;
or
a first FD-OCC sequence: $[1\ 1\ 1\ 1\ 1\ 1]^T$;
a second FD-OCC sequence: $[1\ -1\ 1\ -1\ 1\ -1]^T$;
a third FD-OCC sequence: $[1\ 1\ -1\ -1\ j\ -j]^T$; and
a fourth FD-OCC sequence: $[1\ -1\ -1\ 1\ -1\ -1]^T$;
or
a first FD-OCC sequence: $[1\ 1\ 1\ 1\ 1\ 1]^T$;
a second FD-OCC sequence: $[1\ -1\ 1\ -1\ 1\ -1]^T$;
a third FD-OCC sequence: $[1\ 1\ -1\ -1\ j\ j]^T$; and
a fourth FD-OCC sequence: $[1\ -1\ -1\ 1\ j\ -j]^T$;
or
a first FD-OCC sequence: $[1\ 1\ -1\ 1\ -j\ j]^T$;
a second FD-OCC sequence: $[1\ 1\ j\ j\ j\ -1]^T$;
a third FD-OCC sequence: $[1\ -1\ 1\ j\ -1\ 1]^T$; and
a fourth FD-OCC sequence: $[1\ -1\ -1\ -j\ j\ j]^T$.

Each of the first, second, third, and fourth FD-OCC sequences corresponds to one of the four DMRS ports. The following should be noted:

(1) The FD-OCC sequences may also be results of multiplying the first, second, third, and fourth FD-OCC sequences by -1 or j or -j.
(2) The first, second, third, and fourth FD-OCC sequences may also be other forms of sequences generated based on the criterion of lowest cross correlation, the criterion of mutual orthogonality, or the like. For example, the FD-OCC is DFT sequences with lengths of 6, corresponding to four of six column vectors of a sixth-order DFT matrix.

For example, the first FD-OCC sequence, second FD-OCC sequence, third FD-OCC sequence, or fourth FD-OCC sequence may be one of the following sequences:

$[1\ 1\ 1\ 1\ 1\ 1]^T$;
$[1\ e^{(j*5/3*pi)}\ e^{(j*4/3*pi)}\ -1\ e^{(j*2/3*pi)}\ e^{(j*1/3*pi)}]^T$;
$[1\ e^{(j*4/3*pi)}\ e^{(j*2/3*pi)}\ 1\ e^{(j*4/3*pi)}\ e^{(j*2/3*pi)}]^T$;
$[1\ -1\ 1\ -1\ 1\ -1]^T$;
$[1\ e^{(j*2/3*pi)}\ e^{(j*4/3*pi)}\ 1\ e^{(j*2/3*pi)}\ e^{(j*4/3\ *pi)}]^T$; and
$[1\ e^{(j*1/3*pi)}\ e^{(j*2/3\ *pi)}\ -1\ e^{(j*4/3*pi)}\ e^{(j*5/3*pi)}]^T$.

In the foregoing and following sequences, pi represents pi $\pi$, and e^(A) represents a natural constant e to the power of A, where A is a general term and may be (j * 5/3 *pi) or the like.

Element values of a plurality of FD-OCC sequences described in this embodiment correspond to L = 6 specific subcarriers, but element values of corresponding FD-OCC sequences on the specific subcarriers may be a result of unified exchange of element indexes of the four FD-OCC sequences listed in this embodiment. For example, values of second elements and third elements of the first, second, third, and fourth FD-OCC sequences are exchanged in a unified manner. For example, the first, second, third, and fourth FD-OCC sequences are the following sequences:

a first FD-OCC sequence: $[1\ 1\ -1\ 1\ -j\ j]^T$;
a second FD-OCC sequence: $[1\ 1\ j\ j\ j\ -1]^T$;
a third FD-OCC sequence: $[1\ -1\ 1\ j\ -1\ 1]^T$; and
a fourth FD-OCC sequence: $[1\ -1\ -1\ -j\ j\ j]^T$.

FD-OCC sequences after the element index exchange are:

a first FD-OCC sequence: $[1\ -1\ 1\ 1\ j\ j]^T$;
a second FD-OCC sequence: $[1\ j\ 1\ j\ j\ -1]^T$;
a third FD-OCC sequence: $[1\ 1\ -1\ j\ -1\ 1]^T$; and
a fourth FD-OCC sequence: $[1\ -1\ -1\ -j\ j\ j]^T$.

In a case that the DMRS has a double-symbol structure, FD-OCC sequences corresponding to eight DMRS ports in a CDM group are: four FD-OCC sequences with lengths of 6, which are generated based on the criterion of lowest cross correlation, the criterion of mutual orthogonality, or the like. Alternatively, four FD-OCC sequences with lengths of 6 are obtained in the following manner: Six FD-OCC sequences with lengths of 6 are generated based on the criterion of lowest cross correlation, the criterion of mutual orthogonality, or the like, and then four FD-OCC sequences with lengths of 6 are selected from the six FD-OCC sequences. Each of the four FD-OCC sequences with the lengths of 6 corresponds to two of the eight DMRS ports in one CDM group.

For example, the FD-OCC sequences corresponding to the eight DMRS ports in one CDM group are the FD-OCC sequences listed above.

TD-OCC sequences corresponding to the eight DMRS ports in one CDM group are:

a first TD-OCC sequence: $[1\ 1]^T$; and
a second TD-OCC sequence: $[1\ -1]^T$.

It should be noted that the first and second TD-OCC sequence may be other forms of sequences generated based on the criterion of lowest cross correlation, the criterion of mutual orthogonality, or the like.

Embodiment 6

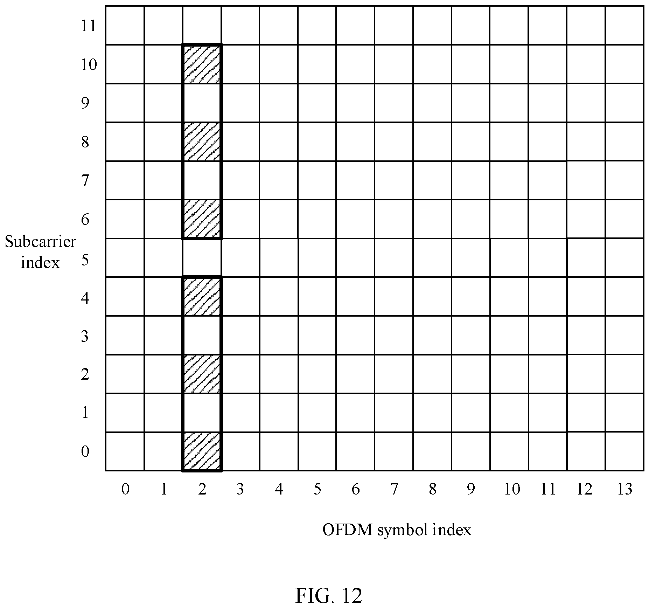

This embodiment is used to describe L = 3 specific subcarriers corresponding to DMRS ports when a type of a DMRS is a DMRS configuration type 1 and a length of an FD-OCC sequence is 3. FIG. 12 uses a single-symbol structure and a CDM group 0 as an example. This embodiment is also applicable to a CDM group 1 and/or a double-symbol structure.

As shown in FIG. 12, in a case that the DMRS has a single-symbol structure, FD-OCC sequences corresponding to three DMRS ports in a CDM group are: three FD-OCC sequences with lengths of 3, which are generated based on a criterion of lowest cross correlation, a criterion of mutual orthogonality, or the like. Each of the three FD-OCC sequences with the lengths of 3 corresponds to one of the three DMRS ports in one CDM group.

For example, the FD-OCC sequences corresponding to the three DMRS ports in one CDM group are:

a first FD-OCC sequence: $[1\ 1\ 1]^T$;
a second FD-OCC sequence: $[1\ e^{(j*4/3*pi)}\ e^{(j*2/3*pi)}]^T$; and
a third FD-OCC sequence: $[1\ e^{(j*2/3*pi)}\ e^{(j*4/3*pi)}]^T$.

Each of the first, second, and third FD-OCC sequences corresponds to one of the three DMRS ports. It should be noted that the first, second, and third FD-OCC sequences may be other forms of sequences generated based on the criterion of lowest cross correlation, the criterion of mutual orthogonality, or the like.

In a case that the DMRS has a double-symbol structure, FD-OCC sequences corresponding to six DMRS ports in a CDM group are: three FD-OCC sequences with lengths of 3, which are generated based on the criterion of lowest cross correlation, the criterion of mutual orthogonality, or the like. Each of the three FD-OCC sequences with the lengths of 3 corresponds to two of the six DMRS ports in one CDM group.

For example, the FD-OCC sequences corresponding to the six DMRS ports in one CDM group are:

a first FD-OCC sequence: $[1\ 1\ 1]^T$;
a second FD-OCC sequence: $[1\ e^{\wedge}(j*4/3*pi)\ e^{\wedge}(j*2/3*pi)]^T$; and
a third FD-OCC sequence: $[1\ e^{\wedge}(j*2/3*pi)\ e^{\wedge}(j*4/3*pi)]^T$.

It should be noted that the first, second, and third FD-OCC sequences may be other forms of sequences generated based on the criterion of lowest cross correlation, the criterion of mutual orthogonality, or the like.

TD-OCC sequences corresponding to the six DMRS ports in one CDM group are:

a first TD-OCC sequence: $[1\ 1]^T$; and
a second TD-OCC sequence: $[1\ -1]^T$.

It should be noted that the first and second TD-OCC sequence may be other forms of sequences generated based on the criterion of lowest cross correlation, the criterion of mutual orthogonality, or the like.

The DMRS generation method provided in the embodiments of this application may be performed by a DMRS generation apparatus. A DMRS generation apparatus provided in the embodiments of this application is described by assuming that the DMRS generation apparatus performs the DMRS generation method in the embodiments of this application.

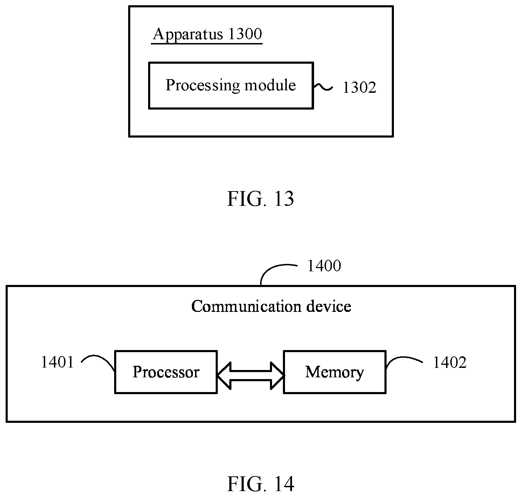

FIG. 13 is a schematic diagram of a structure of a DMRS generation apparatus according to an embodiment of this application. The apparatus may correspond to a terminal or a network-side device in another embodiment. As shown in FIG. 13, the apparatus 1300 includes the following module:

a processing module 1302, configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

Optionally, the apparatus 1300 further includes a communication module.

The DMRS generation apparatus provided in this embodiment of this application maps the FD-OCC sequence with the length of L to the L subcarriers, where the L subcarriers are the specific subcarriers corresponding to the N DMRS ports, the FD-OCC sequence is used for CDM of the N DMRS ports, and the N DMRS ports belong to one CDM group. Because L is greater than 2, this embodiment of this application is equivalent to further extending a quantity of DMRS ports by extending the length of the FD-OCC sequence. This helps increase a quantity of users in MU-MIMO to support more data streams. Therefore, a feasible solution is provided for more users multiplexed in MU-MIMO, and performance of the communication system is improved.

Optionally, in an embodiment, the length L of the FD-OCC sequence is related to a type of DMRS, where in a case that the type of DMRS is DMRS configuration type 1, a value of L is 3, 4, or 6; or in a case that the type of DMRS is DMRS configuration type 2, a value of L is 4.

Optionally, in an embodiment, the L subcarriers meet at least one of the following: (1) being L subcarriers with continuous relative indexes, where the relative indexes correspond to one CDM group; (2) being L subcarriers determined according to a preset rule; (3) being L subcarriers configured or indicated by a network-side device in a form of a bitmap; and (4) being L subcarriers other than unused subcarriers configured or indicated by the network-side device.

Optionally, in an embodiment, the network-side device configures or indicates a first subcarrier among the L subcarriers.

Optionally, in an embodiment, in a case that the type of DMRS is DMRS configuration type 1 and that the value of L is 4, the L subcarriers are: four of K subcarriers corresponding to one CDM group in an RB, where K is a positive integer and K is greater than L; or four of K×M subcarriers corresponding to one CDM group in M RBs, where M is a positive integer and M is greater than 1.

Optionally, in an embodiment, the L subcarriers are four of the K subcarriers corresponding to one CDM group in the RB, and the L subcarriers are one of the following: (1) first four subcarriers in an ascending order of relative indexes; (2) first four subcarriers in a descending order of relative indexes; (3) first two subcarriers with largest relative indexes and first two subcarriers with smallest relative indexes; (4) first two subcarriers in an ascending order of relative indexes among first K/2 subcarriers in an ascending order of relative indexes and first two subcarriers in an ascending order of relative indexes among last K/2 subcarriers in an ascending order of relative indexes; (5) last two subcarriers in an ascending order of relative indexes among the first K/2 subcarriers in the ascending order of relative indexes and last two subcarriers in an ascending order of relative indexes among the last K/2 subcarriers in the ascending order of relative indexes; (6) one subcarrier with a smallest relative index and one subcarrier with a largest relative index among the first K/2 subcarriers in the ascending order of relative indexes and one subcarrier with a smallest relative index and one subcarrier with a largest relative index among the last K/2 subcarriers in the ascending order of relative indexes; and (7) the last two subcarriers in the ascending order of relative indexes among the first K/2 subcarriers in the ascending order of relative indexes and the first two subcarriers in the ascending order of relative indexes among the last K/2 subcarriers in the ascending order of relative indexes. The relative indexes in the foregoing examples correspond to one CDM group.

Optionally, in an embodiment, the L subcarriers are L of the $K \times M$ subcarriers corresponding to one CDM group in the M RBs, where the $K \times M$ subcarriers are divided into $(K \times M \div L)$ parts, and there are L subcarriers in each part.

Optionally, in an embodiment, relative indexes of the L subcarriers are adjacent; or an interval between relative indexes of the L subcarriers is P, where P is a positive integer, and the relative indexes correspond to one CDM group.

Optionally, in an embodiment, a value of M meets at least one of the following that: (1) the value is agreed by a network-side device and a terminal side by default; (2) the value is configured or indicated by the network-side device; (3) the value is consistent with a granularity of a precoding resource block group PRG; and (4) the value is an integer multiple of 2.

Optionally, in an embodiment, the L subcarriers are L of the $K \times M$ subcarriers corresponding to one CDM group in the M RBs, where a bandwidth of a data channel scheduled by a network-side device for a terminal meets at least one of the following that: (1) a quantity of RBs in the bandwidth is an integer multiple of M; (2) a difference between a start RB position of the bandwidth and a CRB 0 is an integer multiple of M or 0; (3) a difference between the start RB position of the bandwidth and a start RB position of a BWP in which the bandwidth is located is an integer multiple of M or 0; (4) a difference between start RB positions of data channels scheduled by a plurality of terminals corresponding to the N DMRS ports is an integer multiple of M or 0; (5) a quantity of RBs corresponding to each continuous RB segment in the bandwidth is an integer multiple of M; and (6) a difference between a start RB position of each continuous RB segment in the bandwidth and the CRB 0 is an integer multiple of M or 0.

Optionally, in an embodiment, the L subcarriers are L of the K subcarriers corresponding to one CDM group in the RB; and a ratio of EPRE of a data channel to EPRE of the DMRS meets at least one of the following that: (1) when one CDM group is not occupied by data, the ratio of the EPRE of the data channel to the EPRE of the DMRS is 0 dB; and (2) when two CDM groups are not occupied by data, the ratio of the EPRE of the data channel to the EPRE of the DMRS is -4.77 dB.

Optionally, in an embodiment, in a case that the type of DMRS is DMRS configuration type 1 and that the value of L is 3 or 6, the L subcarriers are L subcarriers corresponding to one CDM group in the RB; or in a case that the type of DMRS is DMRS configuration type 2 and that the value of L is 4, the L subcarriers are L subcarriers corresponding to one CDM group in the RB.

Optionally, in an embodiment, in a case that the DMRS has a double-symbol structure, the FD-OCC sequence with the length of L is used in combination with a time division-orthogonal cover code TD-OCC sequence with a length of J, where J is a positive integer.

Optionally, in an embodiment, the FD-OCC sequence with the length of L acts on the N DMRS ports as a first capability of a terminal, where a terminal that does not support the first capability and a terminal that supports the first capability support multi-user multiple-input multiple-output MU-MIMO multiplexing.

Optionally, in an embodiment, the terminal that does not support the first capability and the terminal that supports the first capability meet at least one of the following that: (1) MU-MIMO multiplexing is performed in a form of frequency division multiplexing FDM on DMRS ports corresponding to the terminal that does not support the first capability and the terminal that supports the first capability; (2) MU-MIMO multiplexing is performed in a form of time division multiplexing TDM on the DMRS ports corresponding to the terminal that does not support the first capability and the terminal that supports the first capability; and (3) MU-MIMO multiplexing is performed in a form of CDM on the DMRS ports corresponding to the terminal that does not support the first capability and the terminal that supports the first capability.

Optionally, in an embodiment, the FD-OCC sequence meets one of the following: (1) lowest cross correlation between sequences; and (2) mutual orthogonality between sequences.

Optionally, in an embodiment, the FD-OCC sequence is at least one of the following: (1) a CGS; (2) a DFT sequence; (3) a sequence whose elements are BPSK symbols; (4) a sequence whose elements are QPSK symbols; (5) a sequence whose elements are 6PSK symbols; (6) a sequence whose elements are 8PSK symbols; (7) a sequence whose elements include 1 and -1; and (8) a sequence whose elements include 1, -1, an imaginary number j, and an imaginary number -j.

For the apparatus 400 in this embodiment of this application, refer to the processes of the method 200 in the corresponding embodiment of this application. In addition, the units/modules of the apparatus 400 and other operations and/or functions described above are used to implement the corresponding processes of the method 200, with the same or equivalent technical effect achieved. For brevity, details are not described herein again.

The DMRS generation apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The DMRS generation apparatus provided in this embodiment of this application can implement each process implemented in the method embodiment in FIG. 2, with the same technical effect achieved. To avoid repetition, details are not described herein again.

Optionally, as shown in FIG. 14, an embodiment of this application further provides a communication device 1400, including a processor 1401 and a memory 1402. A program or instructions are stored in the memory 1402 and executable on the processor 1401. For example, when the communication device 1400 is a terminal, and the program or instructions are executed by the processor 1401, each step of the foregoing embodiment of the DMRS generation method is implemented, with the same technical effect achieved. When the communication device 1400 is a network-side device, and the program or instructions are executed by the processor 1401, each step of the foregoing embodiment of the DMRS generation method is implemented, with the same technical effect achieved. To avoid repetition, details are not described herein again.

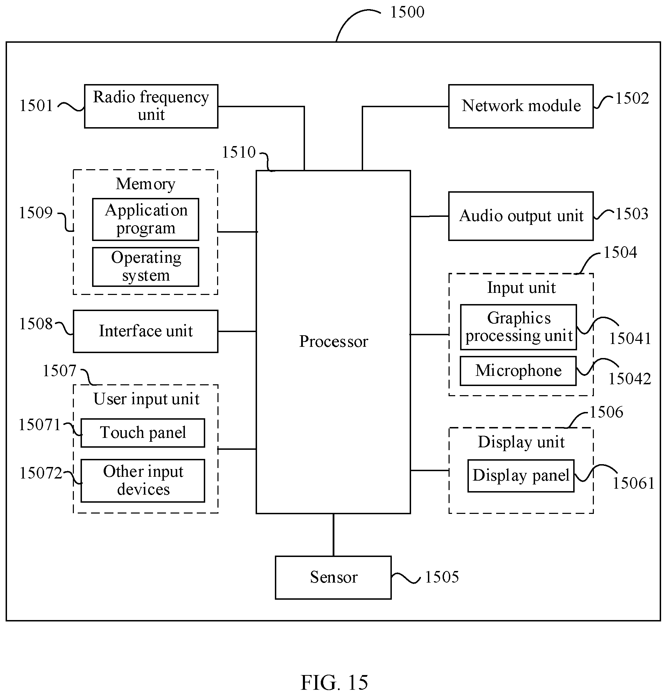

An embodiment of this application further provides a terminal, including a processor and a communication interface. The processor is configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2. The terminal embodiment corresponds to the foregoing terminal-side method embodiment, and each implementation process and implementation of the foregoing method embodiment can be applied to the terminal embodiment, with the same technical effect achieved. Specifically, FIG. 15 is a schematic diagram of a hardware structure of a terminal for implementing an embodiment of this application.

The terminal 1500 includes but is not limited to at least some components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the terminal 1500 may further include a power supply (for example, a battery) supplying power to all components. The power supply may be logically connected to the processor 1510 through a power management system. In this way, functions such as charge management, discharge management, and power consumption management are implemented by using the power management system. The terminal structure shown in FIG. 15 does not constitute a limitation on the terminal. The terminal may include more or fewer components than those shown in the figure, or some components are combined, or component arrangements are different. Details are not described herein again.

It should be understood that, in this embodiment of this application, the input unit 1504 may include a graphics processing unit (Graphics Processing Unit, GPU) 15041 and a microphone 15042. The graphics processing unit 15041 processes image data of a still picture or video obtained by an image capture apparatus (such as a camera) in a video capture mode or an image capture mode. The display unit 1506 may include a display panel 15061, and the display panel 15061 may be configured in a form of a liquid crystal display, an organic light-emitting diode, or the like. The user input unit 1507 includes at least one of a touch panel 15071 and other input devices 15072. The touch panel 15071 is also referred to as a touchscreen. The touch panel 15071 may include two parts: a touch detection apparatus and a touch controller. The other input devices 15072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1501 may transmit the downlink data to the processor 1510 for processing. In addition, the radio frequency unit 1501 may send uplink data to the network-side device. Usually, the radio frequency unit 1501 includes but is not limited to an antenna, an amplifier, a transceiver, a coupler, a low noise amplifier, a duplexer, and the like.

The memory 1509 may be configured to store software programs or instructions and various data. The memory 1509 may primarily include a first storage area for storing programs or instructions and a second storage area for storing data. The first storage area may store an operating system, an application program or instructions required by at least one function (such as an audio play function and an image play function), and the like. In addition, the memory 1509 may include a volatile memory or a non-volatile memory, or the memory 1509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1509 in this embodiment of this application includes but is not limited to these and any other suitable types of memories.

The processor 1510 may include one or more processing units. Optionally, the processor 1510 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 1510.

The processor 1510 may be configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

The terminal provided in this embodiment of this application maps the FD-OCC sequence with the length of L to the L subcarriers, where the L subcarriers are the specific subcarriers corresponding to the N DMRS ports, the FD-OCC sequence is used for CDM of the N DMRS ports, and the N DMRS ports belong to one CDM group. Because L is greater than 2, this embodiment of this application is equivalent to further extending a quantity of DMRS ports by extending the length of the FD-OCC sequence. This helps increase a quantity of users in MU-MIMO to support more data streams. Therefore, a feasible solution is provided for more users multiplexed in MU-MIMO, and performance of the communication system is improved.

The terminal 1500 provided in this embodiment of this application can further implement each process of the foregoing embodiment of the DMRS generation method, with the same technical effect achieved. To avoid repetition, details are not described herein again.

An embodiment of this application further provides a network-side device, including a processor and a communication interface. The processor is configured to map an FD-OCC sequence with a length of L to L subcarriers, where the L subcarriers are specific subcarriers corresponding to N DMRS ports, the FD-OCC sequence is used for CDM of the N DMRS ports, the N DMRS ports belong to one CDM group, L and N are positive integers, and L is greater than 2. The network-side device embodiment corresponds to the foregoing method embodiment of the network-side device, and each implementation process and implementation of the foregoing method embodiment can be applied to the network-side device embodiment, with the same technical effect achieved.

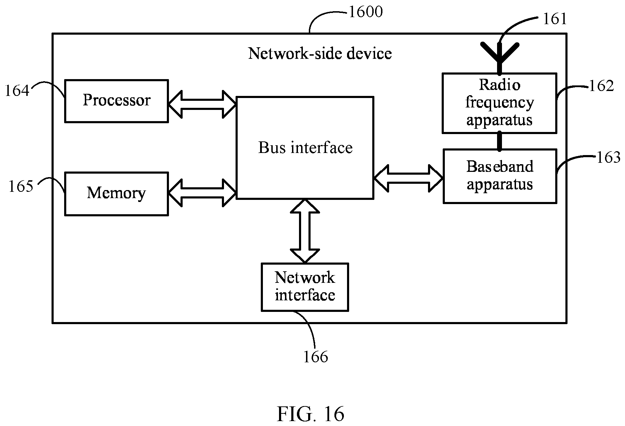

Specifically, an embodiment of this application further provides a network-side device. As shown in FIG. 16, the network-side device 1600 includes an antenna 161, a radio frequency apparatus 162, a baseband apparatus 163, a processor 164, and a memory 165. The antenna 161 is connected to the radio frequency apparatus 162. In an uplink direction, the radio frequency apparatus 162 receives information by using the antenna 161, and sends the received information to the baseband apparatus 163 for processing. In a downlink direction, the baseband apparatus 163 processes to-be-sent information, and sends the information to the radio frequency apparatus 162; and the radio frequency apparatus 162 processes the received information and then sends the information out by using the antenna 161.

The method performed by the network-side device in the foregoing embodiment may be implemented in the baseband apparatus 163. The baseband apparatus 163 includes a baseband processor.

The baseband apparatus 163 may include, for example, at least one baseband unit, where a plurality of chips are disposed on the baseband unit. As shown in FIG. 16, one of the chips is, for example, the baseband processor, connected to the memory 165 by using a bus interface, to invoke a program in the memory 165 to perform the operation of the network device shown in the foregoing method embodiment.

The network-side device may further include a network interface 166, where the interface is, for example, a common public radio interface (Common Public Radio Interface, CPRI).

Specifically, the network-side device 1600 in this embodiment of the present invention further includes a program or instructions stored in the memory 165 and executable on the processor 164. When the processor 164 invokes the program or instructions in the memory 165, the method performed by each module shown in FIG. 13 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the DMRS generation method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the DMRS generation method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the DMRS generation method, with the same technical effect achieved. To avoid repetition, details are not described herein again.

An embodiment of this application further provides a DMRS generation system, including a terminal and a network-side device. The terminal may be configured to perform the steps of the foregoing DMRS generation method. The network-side device may be configured to perform the steps of the foregoing DMRS generation method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In absence of more constraints, an element preceded by "includes a ..." does not preclude existence of other identical elements in the process, method, article, or apparatus that includes the element. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A demodulation reference signal DMRS generation method, comprising:

   mapping, by a communication device, a frequency division-orthogonal cover code FD-OCC sequence with a length of L to L subcarriers, wherein
   the L subcarriers are specific subcarriers corresponding to N DMRS ports, the FD-OCC sequence is used for code division multiplexing CDM of the N DMRS ports, the N DMRS ports belong to one CDM group, L and N are positive integers, and L is greater than 2.

2. The method according to claim 1, wherein the length L of the FD-OCC sequence is related to a type of DMRS, wherein

   in a case that the type of DMRS is DMRS configuration type 1, a value of L is 3, 4, or 6; or
   in a case that the type of DMRS is DMRS configuration type 2, a value of L is 4.

3. The method according to claim 1, wherein the L subcarriers meet at least one of the following:

   being L subcarriers with continuous relative indexes, wherein the relative indexes correspond to one CDM group;
   being L subcarriers determined according to a preset rule;
   being L subcarriers configured or indicated by a network-side device in a form of a bitmap; and
   being L subcarriers other than unused subcarriers configured or indicated by the network-side device.

4. The method according to claim 3, wherein the network-side device configures or indicates a first subcarrier among the L subcarriers.

5. The method according to claim 2, wherein in a case that the type of DMRS is the DMRS configuration type 1 and that the value of L is 4, the L subcarriers are:

four of K subcarriers corresponding to one CDM group in a resource block RB, wherein K is a positive integer and K is greater than L; or

four of K×M subcarriers corresponding to one CDM group in M RBs, wherein M is a positive integer and M is greater than 1.

6. The method according to claim 5, wherein the L subcarriers are the four of the K subcarriers corresponding to one CDM group in the RB, and the L subcarriers are one of the following:

first four subcarriers in an ascending order of relative indexes;

first four subcarriers in a descending order of relative indexes;

first two subcarriers with largest relative indexes and first two subcarriers with smallest relative indexes;

first two subcarriers in an ascending order of relative indexes among first K/2 subcarriers in an ascending order of relative indexes and first two subcarriers in an ascending order of relative indexes among last K/2 subcarriers in an ascending order of relative indexes;

last two subcarriers in an ascending order of relative indexes among the first K/2 subcarriers in the ascending order of relative indexes and last two subcarriers in an ascending order of relative indexes among the last K/2 subcarriers in the ascending order of relative indexes;

one subcarrier with a smallest relative index and one subcarrier with a largest relative index among the first K/2 subcarriers in the ascending order of relative indexes and one subcarrier with a smallest relative index and one subcarrier with a largest relative index among the last K/2 subcarriers in the ascending order of relative indexes; and

the last two subcarriers in the ascending order of relative indexes among the first K/2 subcarriers in the ascending order of relative indexes and the first two subcarriers in the ascending order of relative indexes among the last K/2 subcarriers in the ascending order of relative indexes, wherein

the relative indexes correspond to one CDM group.

7. The method according to claim 5, wherein the L subcarriers are L of the K×M subcarriers corresponding to one CDM group in the M RBs, wherein

the K×M subcarriers are divided into (K×M÷L) parts, and there are L subcarriers in each part.

8. The method according to claim 7, wherein relative indexes of the L subcarriers are adjacent; or an interval between the relative indexes of the L subcarriers is P, wherein P is a positive integer, and the relative indexes correspond to one CDM group.

9. The method according to claim 5, wherein a value of M meets at least one of the following that:

the value is agreed by a network-side device and a terminal side by default;

the value is configured or indicated by the network-side device;

the value is consistent with a granularity of a precoding resource group PRG; and

the value is an integer multiple of 2.

10. The method according to claim 5, wherein the L subcarriers are L of the K×M subcarriers corresponding to one CDM group in the M RBs, wherein a bandwidth of a data channel scheduled by a network-side device for a terminal meets at least one of the following that:

a quantity of RBs in the bandwidth is an integer multiple of M;

a difference between a start RB position of the bandwidth and a common RB 0 is an integer multiple of M or 0;

a difference between the start RB position of the bandwidth and a start RB position of a bandwidth part BWP in which the bandwidth is located is an integer multiple of M or 0;

a difference between start RB positions of data channels scheduled by a plurality of terminals corresponding to the N DMRS ports is an integer multiple of M or 0;

a quantity of RBs corresponding to each continuous RB segment in the bandwidth is an integer multiple of M; and

a difference between a start RB position of each continuous RB segment in the bandwidth and the common RB 0 is an integer multiple of M or 0.

11. The method according to claim 5, wherein the L subcarriers are L of the K subcarriers corresponding to one CDM group in the RB; and a ratio of energy per resource element EPRE of a data channel to EPRE of the DMRS meets at least one of the following that:

when one CDM group is not occupied by data, the ratio of the EPRE of the data channel to the EPRE of the DMRS is 0 dB; and

when two CDM groups are not occupied by data, the ratio of the EPRE of the data channel to the EPRE of the DMRS is -4.77 dB.

12. The method according to claim 2, wherein

in a case that the type of DMRS is the DMRS configuration type 1 and that the value of L is 3 or 6, the L subcarriers are L subcarriers corresponding to one CDM group in a RB; or

in a case that the type of DMRS is the DMRS configuration type 2 and that the value of L is 4, the L subcarriers are L subcarriers corresponding to one CDM group in a RB.

13. The method according to claim 1, wherein in a case that the DMRS has a double-symbol structure, the FD-OCC sequence with the length of L is used in combination with a time division-orthogonal cover code TD-OCC sequence with a length of J, wherein J is a positive integer.

14. The method according to claim 1, wherein the FD-OCC sequence with the length of L acts on the N DMRS ports as a first capability of a terminal, wherein

a terminal that does not support the first capability and a terminal that supports the first capability support multi-user multiple-input multiple-output MU-MIMO multiplexing.

15. The method according to claim 14, wherein the terminal that does not support the first capability and the terminal that supports the first capability meet at least one of the following that:

MU-MIMO multiplexing is performed in a form of frequency division multiplexing FDM on DMRS ports corresponding to the terminal that does not support the first capability and the terminal that supports the first capability;

MU-MIMO multiplexing is performed in a form of time division multiplexing TDM on the DMRS ports corresponding to the terminal that does not support the first capability and the terminal that supports the first capability; and

MU-MIMO multiplexing is performed in a form of CDM on the DMRS ports corresponding to the terminal that does not support the first capability and the terminal that supports the first capability.

16. The method according to claim 1, wherein the FD-OCC sequence meets one of the following:

lowest cross correlation between sequences; and

mutual orthogonality between sequences.

17. The method according to claim 1, wherein the FD-OCC sequence is at least one of the following:

a computer generated sequence CGS;

a discrete Fourier transform DFT sequence;

a sequence whose elements are binary phase shift keying BPSK symbols;

a sequence whose elements are orthogonal phase shift keying QPSK symbols;

a sequence whose elements are 6PSK symbols;

a sequence whose elements are 8PSK symbols;

a sequence whose elements comprise 1 and -1; and

a sequence whose elements comprise 1, -1, an imaginary number j, and an imaginary number j.

18. A DMRS generation apparatus, comprising:

a processing module, configured to map an FD-OCC sequence with a length of L to L subcarriers, wherein the L subcarriers are specific subcarriers corresponding to N DMRS ports, the FD-OCC sequence is used for CDM of the N DMRS ports, the N DMRS ports belong to one CDM group, L and N are positive integers, and L is greater than 2.

19. The apparatus according to claim 18, wherein the length L of the FD-OCC sequence is related to a type of DMRS, wherein

in a case that the type of DMRS is DMRS configuration type 1, a value of L is 3, 4, or 6; or

in a case that the type of DMRS is DMRS configuration type 2, a value of L is 4.

20. The apparatus according to claim 18, wherein the L subcarriers meet at least one of the following:

being L subcarriers with continuous relative indexes, wherein the relative indexes correspond to one CDM group;
being L subcarriers determined according to a preset rule;
being L subcarriers configured or indicated by a network-side device in a form of a bitmap; and
being L subcarriers other than unused subcarriers configured or indicated by the network-side device.

21. The apparatus according to claim 20, wherein the network-side device configures or indicates a first subcarrier among the L subcarriers.

22. The apparatus according to claim 19, wherein in a case that the type of DMRS is the DMRS configuration type 1 and that the value of L is 4, the L subcarriers are:

four of K subcarriers corresponding to one CDM group in an RB, wherein K is a positive integer and K is greater than L; or
four of K×M subcarriers corresponding to one CDM group in M RBs, wherein M is a positive integer and M is greater than 1.

23. The apparatus according to claim 22, wherein the L subcarriers are the four of the K subcarriers corresponding to one CDM group in the RB, and the L subcarriers are one of the following:

first four subcarriers in an ascending order of relative indexes;
first four subcarriers in a descending order of relative indexes;
first two subcarriers with largest relative indexes and first two subcarriers with smallest relative indexes;
first two subcarriers in an ascending order of relative indexes among first K/2 subcarriers in an ascending order of relative indexes and first two subcarriers in an ascending order of relative indexes among last K/2 subcarriers in an ascending order of relative indexes;
last two subcarriers in an ascending order of relative indexes among the first K/2 subcarriers in the ascending order of relative indexes and last two subcarriers in an ascending order of relative indexes among the last K/2 subcarriers in the ascending order of relative indexes;
one subcarrier with a smallest relative index and one subcarrier with a largest relative index among the first K/2 subcarriers in the ascending order of relative indexes and one subcarrier with a smallest relative index and one subcarrier with a largest relative index among the last K/2 subcarriers in the ascending order of relative indexes; and
the last two subcarriers in the ascending order of relative indexes among the first K/2 subcarriers in the ascending order of relative indexes and the first two subcarriers in the ascending order of relative indexes among the last K/2 subcarriers in the ascending order of relative indexes, wherein
the relative indexes correspond to one CDM group.

24. The apparatus according to claim 22, wherein the L subcarriers are L of the K×M subcarriers corresponding to one CDM group in the M RBs, wherein
the K×M subcarriers are divided into (K×M÷L) parts, and there are L subcarriers in each part.

25. The apparatus according to claim 24, wherein relative indexes of the L subcarriers are adjacent; or an interval between the relative indexes of the L subcarriers is P, wherein P is a positive integer, and the relative indexes correspond to one CDM group.

26. The apparatus according to claim 22, wherein a value of M meets at least one of the following that:

the value is agreed by a network-side device and a terminal side by default;
the value is configured or indicated by the network-side device;
the value is consistent with a granularity of a precoding resource block group PRG; and
the value is an integer multiple of 2.

27. The apparatus according to claim 22, wherein the L subcarriers are L of the K×M subcarriers corresponding to one CDM group in the M RBs, wherein a bandwidth of a data channel scheduled by a network-side device for a terminal meets at least one of the following that:

a quantity of RBs in the bandwidth is an integer multiple of M;
a difference between a start RB position of the bandwidth and a common RB 0 is an integer multiple of M or 0;
a difference between the start RB position of the bandwidth and a start RB position of a BWP in which the bandwidth is located is an integer multiple of M or 0;
a difference between start RB positions of data channels scheduled by a plurality of terminals corresponding to the N DMRS ports is an integer multiple of M or 0;
a quantity of RBs corresponding to each continuous RB segment in the bandwidth is an integer multiple of M; and
a difference between a start RB position of each continuous RB segment in the bandwidth and the common RB 0 is an integer multiple of M or 0.

28. The apparatus according to claim 22, wherein the L subcarriers are L of the K subcarriers corresponding to one CDM group in the RB; and a ratio of EPRE of a data channel to EPRE of the DMRS meets at least one of the following that:

when one CDM group is not occupied by data, the ratio of the EPRE of the data channel to the EPRE of the DMRS is 0 dB; and
when two CDM groups are not occupied by data, the ratio of the EPRE of the data channel to the EPRE of the DMRS is -4.77 dB.

29. The apparatus according to claim 19, wherein

in a case that the type of DMRS is the DMRS configuration type 1 and that the value of L is 3 or 6, the L subcarriers are L subcarriers corresponding to one CDM group in a RB; or
in a case that the type of DMRS is the DMRS configuration type 2 and that the value of L is 4, the L subcarriers are L subcarriers corresponding to one CDM group in a RB.

30. The apparatus according to claim 18, wherein in a case that the DMRS has a double-symbol structure, the FD-OCC sequence with the length of L is used in combination with a time division-orthogonal cover code TD-OCC sequence with a length of J, wherein J is a positive integer.

31. The apparatus according to claim 18, wherein the FD-OCC sequence with the length of L acts on the N DMRS ports as a first capability of a terminal, wherein
a terminal that does not support the first capability and a terminal that supports the first capability support multi-user multiple-input multiple-output MU-MIMO multiplexing.

32. The apparatus according to claim 31, wherein the terminal that does not support the first capability and the terminal that supports the first capability meet at least one of the following that:

MU-MIMO multiplexing is performed in a form of frequency division multiplexing FDM on DMRS ports corresponding to the terminal that does not support the first capability and the terminal that supports the first capability;
MU-MIMO multiplexing is performed in a form of time division multiplexing TDM on the DMRS ports corresponding to the terminal that does not support the first capability and the terminal that supports the first capability; and
MU-MIMO multiplexing is performed in a form of CDM on the DMRS ports corresponding to the terminal that does not support the first capability and the terminal that supports the first capability.

33. The apparatus according to claim 18, wherein the FD-OCC sequence meets one of the following:

lowest cross correlation between sequences; and
mutual orthogonality between sequences.

34. The apparatus according to claim 18, wherein the FD-OCC sequence is at least one of the following:

a CGS;
a DFT sequence;
a sequence whose elements are BPSK symbols;
a sequence whose elements are QPSK symbols;
a sequence whose elements are 6PSK symbols;

a sequence whose elements are 8PSK symbols;
a sequence whose elements comprise 1 and -1; and
a sequence whose elements comprise 1, -1, an imaginary number j, and an imaginary number -j.

35. A terminal, comprising a processor and a memory, wherein a program or instructions are stored in the memory and executable on the processor, and when the program or instructions are executed by the processor, steps of the DMRS generation method according to any one of claims 1 to 17 are implemented.

36. A network-side device, comprising a processor and a memory, wherein a program or instructions are stored in the memory and executable on the processor, and when the program or instructions are executed by the processor, steps of the DMRS generation method according to any one of claims 1 to 17 are implemented.

37. A readable storage medium, wherein the readable storage medium stores a program or instructions, and when the program or instructions are executed by a processor, steps of the DMRS generation method according to any one of claims 1 to 17 are implemented.

FIG. 1

200

| A communication device maps an FD-OCC sequence with a length of L to L subcarriers, where the L subcarriers are specific subcarriers corresponding to N DMRS ports, the FD-OCC sequence is used for CDM of the N DMRS ports, and the N DMRS ports belong to a CDM group |
|---|

~ S202

FIG. 2

FIG. 3

FIG. 4

**EP 4 472 318 A1**

FIG. 5

FIG. 6

FIG. 7

FIG. 8

OFDM symbol index

FIG. 9

FIG. 10

FIG. 11

FIG. 12

Apparatus 1300

Processing module ~ 1302

FIG. 13

1400

Communication device

1401 Processor ⟷ Memory 1402

FIG. 14

1500

1501 — Radio frequency unit

Network module — 1502

1510 —

Memory
1509 — Application program
Operating system

Processor

1508 — Interface unit

Audio output unit — 1503

1504
Input unit
Graphics processing unit — 15041
Microphone — 15042

1507 —
User input unit
15071 — Touch panel
15072 — Other input devices

1506
Display unit
Display panel — 15061

Sensor — 1505

FIG. 15

FIG. 16

**INTERNATIONAL SEARCH REPORT**

International application No.

**PCT/CN2023/073086**

| A. | CLASSIFICATION OF SUBJECT MATTER |
|---|---|

H04W72/04(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 解调参考信号, 生成, 序列, 长度, 子载波, 端口, 增加, 映射, 组, DMRS, FD-OCC, TD-OCC, sequence, length, subcarrier, port, increase, add, map, CDM, group

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021024329 A1 (NTT DOCOMO INC.) 11 February 2021 (2021-02-11) description, paragraphs [0085]-[0280], and figures 1-22 | 1-37 |
| X | WO 2021024330 A1 (NTT DOCOMO INC.) 11 February 2021 (2021-02-11) description, paragraphs [0081]-[0282], and figures 1-22 | 1-37 |
| A | CN 111052662 A (SAMSUNG ELECTRONICS CO., LTD.) 21 April 2020 (2020-04-21) entire document | 1-37 |
| A | CN 111183594 A (PANASONIC INTELLECTUAL PROPERTY CORP. OF AMERICA) 19 May 2020 (2020-05-19) entire document | 1-37 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/073086**

| Patent document cited in search report | | | Publication date (day/month/year) | Patent family member(s) | | | Publication date (day/month/year) |
|---|---|---|---|---|---|---|---|
| WO | 2021024329 | A1 | 11 February 2021 | US | 2022278880 | A1 | 01 September 2022 |
| | | | | WO | 2021024329 | A9 | 04 March 2021 |
| WO | 2021024330 | A1 | 11 February 2021 | WO | 2021024330 | A9 | 25 March 2021 |
| | | | | EP | 4009688 | A1 | 08 June 2022 |
| CN | 111052662 | A | 21 April 2020 | KR | 20190022252 | A | 06 March 2019 |
| | | | | KR | 102455798 | B1 | 19 October 2022 |
| | | | | EP | 3639462 | A1 | 22 April 2020 |
| | | | | EP | 3639462 | A4 | 01 July 2020 |
| | | | | US | 2019068308 | A1 | 28 February 2019 |
| | | | | WO | 2019039917 | A1 | 28 February 2019 |
| | | | | US | 10651963 | B2 | 12 May 2020 |
| CN | 111183594 | A | 19 May 2020 | EP | 3468061 | A1 | 10 April 2019 |
| | | | | KR | 20200064108 | A | 05 June 2020 |
| | | | | CO | 2020003728 | A2 | 13 April 2020 |
| | | | | WO | 2019068449 | A1 | 11 April 2019 |
| | | | | JP | 2020536438 | A | 10 December 2020 |
| | | | | JP | 7220708 | B2 | 10 February 2023 |
| | | | | BR | 112020006086 | A2 | 29 September 2020 |
| | | | | US | 2022239400 | A1 | 28 July 2022 |
| | | | | MX | 2020003750 | A | 03 August 2020 |
| | | | | US | 2020228225 | A1 | 16 July 2020 |
| | | | | US | 11349590 | B2 | 31 May 2022 |
| | | | | RU | 2020112051 | A3 | 08 November 2021 |
| | | | | RU | 2020112051 | A | 21 March 2022 |
| | | | | EP | 3692644 | A1 | 12 August 2020 |
| | | | | CA | 3076031 | A1 | 11 April 2019 |
| | | | | IN | 202047018327 | A | 12 June 2020 |
| | | | | RU | 2767768 | C2 | 21 March 2022 |
| | | | | CN | 111183594 | B | 30 September 2022 |

Form PCT/ISA/210 (patent family annex) (July 2022)

# EP 4 472 318 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210090244
- CN 202211103535
- CN 202211297196